# EUROPEAN PATENT APPLICATION

(11) **EP 4 606 865 A1**
(43) Date of publication of application: **27.08.2025**
(21) Application number: 24158600.7
(22) Date of filing: 20.02.2024
(51) Int. Cl.: C08L 97/00, C08H 7/00, C07G 1/00

(54) **LIGNIN CONSTITUENTS CONTAINING COMPOSITION AND ITS APPLICATIONS**

(71) Applicant: Hansen & Rosenthal GmbH & Co. KG, 20457 Hamburg (DE)
(72) Inventor: PODSCHUN, Jacob, 20457 Hamburg (DE); WITTMANN, Tobias, 14974 Ludwigsfelde (DE); RATHI, Akansha, 20457 Hamburg (DE); TRIMBACH, Jürgen, 20457 Hamburg (DE)
(74) Representative: Bardehle Pagenberg Partnerschaft mbB Patentanwälte Rechtsanwälte

(57) **Abstract**

The present invention relates to a composition comprising at least two lignin constituents A) and B), wherein at least a part of the oxygen atoms originating from OH-groups present in the chemical structure of at least one of A) and B) is covalently bonded to at least one kind of organic residues selected from organic residues comprising 1 to 22 carbon atoms, wherein the M_{w} of all lignin constituents is > 200 g/mol, their polydispersity index is >1.20, the sum of aromatic and aliphatic hydroxyl groups of all lignins is 0 or ≤ 2.00 mmol/g, the sum of aliphatic hydroxyl groups of all lignins is 0 or < 0.25 mmol/g, the methoxyl group content of all lignins is in a range of 1.0 wt.-% to 20.0 wt.-%, based on the total weight of all lignin constituents being present, and the number of unsubstituted aromatic C-H bonds per aromatic ring of each chemical structure of each lignin constituent is on average ≥ 2 and ≤ 4, to a process for preparing the composition, to a mixture of said composition and at least one hydrocarbon, a use of said composition in polymer-containing formulations, coating formulations, pharmaceutical formulations and cosmetic formulations, e.g., as plasticizer, plasticizer oil, and/or process oil, and to a polymer formulation comprising at least one polymer and said composition.

## Description

The present invention relates to a composition comprising at least two lignin constituents, to a process for preparing the composition, to a mixture of said composition and at least one hydrocarbon, to a use of said composition in polymer-containing formulations, coating formulations, pharmaceutical formulations, and cosmetic formulations, and to a polymer formulation comprising at least one polymer and said composition.

### Background of the invention

Lignin is a biopolymer from hardwood, softwood and annual plants and exhibits good solubility in or miscibility with many polar and alkaline media after extraction/recovery in the form of, for example, kraft lignin, lignosulfonate, or hydrolysis lignin.

However, the solubility of lignin in or the miscibility with less polar solvents, such as ethyl acetate, for example, is only very low. For non-polar hydrocarbons such as alkanes, e.g., heptane, and aromatics, such as for example toluene, the solubility or the miscibility is negligibly low (Podschun et al., European Polymer Journal, 2015, 67, 1-11). Industrial products, however, are in many variants based on non-polar hydrocarbons, and a functional replacement of those by the aforementioned known lignin products is thus not possible.

In addition, the compatibility with other non-solvent materials such as polymers, in particular rubbers, but also fillers, is often not satisfactory. Industrial polymer products, in particular for use in the rubber industry, hence, in many variants are not compatible with the aforementioned known lignin products.

In the case of degradation products of lignin, for example in the case of lignin monomers such as guaiacol (2-methoxyphenol), for example, the solubility or miscibility in non-polar hydrocarbons is given, but these monomer building blocks have the disadvantage of a significantly higher vapor pressure as compared to lignin biopolymers, and thus they are mostly related to a moderate to high, comparatively unpleasant odor due to their high volatility, a fact that makes such building blocks not or only to a limited extent usable in a variety of industrial applications.

In order to make lignin biopolymers compatible with hydrocarbons, which do not present the aforementioned odor characteristics, but are however, as mentioned hereinabove, not miscible with non-polar hydrocarbons or not soluble therein, several methods have been developed in order to improve polymer applications in particular. It is known from US 2010/0152428 A1 to introduce functional groups into lignin biopolymers by chemical modification. According to US 2010/0152428 A1, two types of ester groups are introduced into the lignin scaffold by esterification of free OH groups, whereby the glass transition temperature can be reduced and the modified lignin biopolymer thus obtained can better be processed together with polymers. From WO 2013/050661 A1 also, modified lignin biopolymers are known that can be obtained by partial esterification of the hydroxyl groups of the lignin. Here, long-chained fatty acids are employed for esterification. The task of WO 2013/050661 A1 is to improve the film formation, by means of the lignin biopolymers and the barrier properties of the resulting films. Functionalized lignin biopolymers are known from EP 2 223 928 A1. A variety of possible functionalizing agents is cited for functionalization. Lignin biopolymers functionalized in this way are employed as fillers in rubber compounds. WO 2018/111183 A1 discloses polymer mixtures containing at least one modified lignin biopolymer. The lignin biopolymer is modified with an alkyl-containing group that is bound to the lignin by means of an ether group linker, wherein the alkyl-containing group is derived from a fatty acid methyl ester.

Disadvantageous with the known modified or functionalized lignin biopolymers, however, is that the compatibilization achieved for an intended improved applicability with polymers is often not sufficient in order to achieve a satisfactory solubility in or at least sufficient miscibility of lignin biopolymers thus functionalized with non-polar hydrocarbons, in particular oils.

From WO 2015/094098 A1 and WO 2015/094099 A1 compositions are known that contain an organic solvent and lignin or a lignin derivative. The OH groups of the lignin or lignin derivative are in part esterified. The solvents described as providing solubility for the lignin derivatives are predominantly solvents that contain oxygen and therefore have a certain polarity. From WO 2016/072915 A1, compositions are known that contain a solvent, such as an oil, and a lignin. The OH groups of the lignin are etherified here. WO 2016/204682 A1 discloses compositions that contain a solvent, such as an oil, and a lignin, wherein the lignin presents an alkyl-containing group bonded to the lignin by means of a linker. The alkyl-containing group can be an alkyl ester or an alkyl ether group, among others. In WO 2015/199608 A1, depolymerized lignin and a process for its production are disclosed. WO 2018/174793A1 discloses a composition containing diesel and/or gasoline comprising functionalized lignin and depolymerized functionalized lignin, wherein the functionalization is a functionalization with an alkyl-containing group that is bonded to the lignin by means of a linker. The alkyl-containing group is an alkyl ester or an alkyl ether group.

A disadvantage of the known, optionally functionalized lignins and lignin derivatives described in the preceding paragraph is the occurrence of decomposition reactions with the formation of volatile degradation products when they are subjected to comparatively high temperatures. Furthermore, it is disadvantageous when the known, optionally functionalized lignins and lignin derivatives described in the preceding paragraph are already present in a mixture with organic solvents including gasoline and/or diesel, and/or contain constituents having a comparatively low flash point, such as non-aromatic and/or low-molecular constituents. Such organic solvents, constituents having a comparatively low flash point, and/or degradation products may often even be desirable for employment of the optionally functionalized lignins and lignin derivatives in fuel applications, since a combustion is here intended. In material applications, however, their presence is undesirable. Here, in addition to the organic solvents, constituents having a comparatively low flash point, and/or degradation products, any non-reacted alkylation reagents optionally present are particularly disturbing, since these have a polarity induced by their reactive groups, which may lead to lacking compatibility.

In addition, it is, e.g., illustrated by M.G. Kumaran et al., Journal of Applied Polymer Science 1978, 2, 1885-1892, that utilization of lignins in rubber compounds results in a two-phase system and compatibility problems associated therewith, where use of the lignins induces negative effects such as a reduced modulus and tensile strength. Further, as shown by D. Barana et al., ACS Sustainable Chemistry & Engineering 2016, 4, 5258-5267, the lignin phase tends to agglomerate thereby infringing the mechanical and thermal properties of the rubber compounds.

Therefore, there is a need for lignin-based compounds or components which do not have the disadvantages mentioned hereinbefore, but instead have a good compatibility to a variety of different industrially used materials such as non-polar hydrocarbons, polymers, in particular rubber, and fillers, in order to make these compounds or components suitable as all-rounders for a variety of different applications. In particular, there is a need for lignin-based compounds or components, which, when present in form of a liquid or meltable solid have a high miscibility with and/or good solubility in non-polar hydrocarbons, in particular oils, and which allow a partial or even complete replacement of non-polar hydrocarbons in industrial applications. At the same time, however, at least odor neutrality of these products should be guaranteed, and it should also be ensured that no evaporation occurs during their further processing, even at comparatively high processing temperatures, in order to enable their employment in a widest possible range of industrial applications, in particular also for those applications in which odor pollution and evaporation are disadvantageous or disturbing.

### Problem

It has been therefore an objective underlying the present invention to provide lignin-based compounds or components that have a good compatibility to a variety of different industrially used materials such as non-polar hydrocarbons, polymers such as rubbers, and fillers, in order to make these compounds or components suitable as all-rounders for a variety of different applications, in particular that have, when present in form of a liquid, a high miscibility with and/or good solubility in non-polar hydrocarbons, in particular oils, and which allow a partial or even complete replacement of non-polar hydrocarbons in industrial applications, but at the same time have at least odor neutrality and guarantee further processing without evaporation even at comparatively high processing temperatures, in order to enable their employment in a widest possible range of industrial applications, in particular also for those applications in which odor pollution and evaporation are disadvantageous or disturbing.

### Solution

This objective has been solved by the subject-matter of the claims of the present application as well as by the preferred embodiments thereof disclosed in this specification, i.e., by the subject matter described herein.

A first subject-matter of the present invention is a composition comprising at least two lignin constituents A) and B) being different from each other,
wherein at least a part of the oxygen atoms originating from hydroxyl groups present in the chemical structure of at least one of constituents A) and B) is covalently bonded to at least one kind of organic residues selected from organic residues comprising at least 1 and at most 22 carbon atoms,
wherein the weight average molecular weight (M_{w}) of all lignin constituents being present in the composition including constituents A) and B) is > 200 g/mol, and wherein the polydispersity index (PDI) of all lignin constituents being present in the composition including constituents A) and B) is >1.20,
wherein the sum of aromatic and aliphatic hydroxyl groups of all lignin constituents being present in the composition including constituents A) and B) is 0 or ≤ 2.00 mmol/g, and wherein the sum of aliphatic hydroxyl groups of all lignin constituents being present in the composition including constituents A) and B) is 0 or < 0.25 mmol/g,
wherein the methoxyl group content of all lignin constituents being present in the composition including constituents A) and B) is in a range of 1.0 wt.-% to 20.0 wt.-%, based on the total weight of all lignin constituents being present in the composition including constituents A) and B), and
wherein the number of unsubstituted aromatic C-H bonds per aromatic ring of each chemical structure of each lignin constituent being present in the composition including constituents A) and B) is on average ≥ 2 and ≤ 4.

A further subject-matter of the present invention is a process for preparing the inventive composition, which comprises at least steps 1) and 2), namely
1) provision of a precursor composition comprising at least two lignin precursor constituents A-1) and B-1) being different from each other, wherein the weight average molecular weight (M_{w}) of all lignin precursor constituents being present in the precursor composition including precursor constituents A-1) and B-1) is lower than the weight average molecular weight (M_{w}) of all lignin constituents being present in the composition obtained after step 2) including at least constituents A) and B), wherein at least one, preferably both, of two lignin precursor constituents A-1) and B-1) bear one or more hydroxyl groups, and
2) reacting at least part of the hydroxyl groups of at least one of lignin precursor constituents A-1) and B-1) with at least one agent containing at least one organic residue that in turn contains at least 1 and at most 22 carbon atoms and optionally contains one or more oxygen atoms and/or one or more sulfur atoms, and includes at least one reactive functional group that can react with at least part of the hydroxyl groups of at least one of the lignin precursor constituents A-1) and B-1) such that covalent bonds between at least a part of the oxygen atoms of the hydroxyl groups of at least one of lignin precursor constituents A-1) and B-1) and the at least one organic residue comprising at least 1 and at most 22 carbon atoms originating from the agent used are formed, wherein after having performed step 2) the composition comprising the at least two lignin constituents A) and B) is obtained.

A further subject-matter of the present invention is a mixture of at least one inventive composition or at least one composition obtainable by the inventive process and at least one preferably non-polar hydrocarbon.

A further subject-matter of the present invention is a use of at least one inventive composition or of at least one composition obtainable by the inventive process in polymer-containing formulations, preferably as plasticizer, plasticizer oil, and/or process oil, respectively, or in pharmaceutical formulations, or cosmetic formulations.

A further subject-matter of the present invention is a polymer formulation, preferably a rubber formulation comprising at least one polymer, preferably at least one rubber, and at least one inventive composition or at least one composition obtainable by the inventive process, wherein the polymer formulation preferably further comprises at least one filler, particularly when the polymer formulation is a rubber formulation, preferably a vulcanizable rubber formulation.

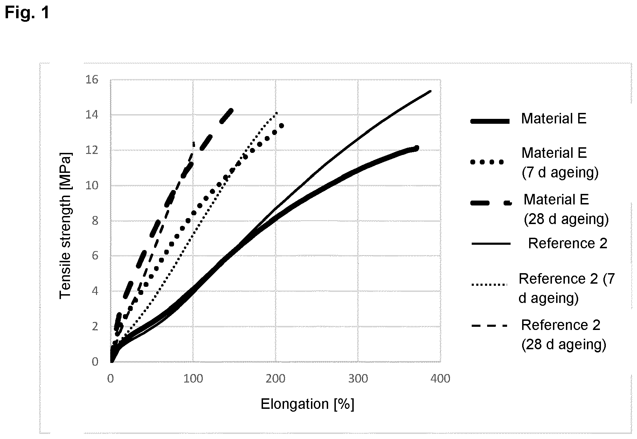

Surprisingly, it has been found that the compositions according to the invention, in particular when present as a liquid (that is, in the state of aggregation "liquid" at standard conditions (18 to 25 °C, 1,013 mbar) or under application processing conditions, e.g., at elevated temperatures in thermoplastic molding or rubber vulcanization, e.g., at approximately 150±50°C), have a high miscibility with non-polar hydrocarbons, in particular oils, and/or a good solubility in non-polar hydrocarbons, in particular oils. Thus, the compositions according to the invention can be employed as a partial replacement or even as complete replacement of such non-polar hydrocarbons, such as oils, in many industrial applications. In this respect, it has been found that this does not have any disadvantages with regard to the mechanical properties of vulcanized rubber compositions, such as elongation at break, hardness, and tensile strength (cf. **Fig. 1**). For example, the compositions according to the invention can be employed as softening agents/plasticizers, and in particular as a replacement for petrochemical softening agents/plasticizers or as a replacement product for extender oils. This is particularly advantageous from an ecological point of view, since the use of products obtained from fossil raw materials and the fossil raw materials as such can thus be in part or even completely dispensed with for these industrial applications, because the compositions according to the invention can be obtained entirely or at least in part from renewable raw materials.

It has also been found that the compositions of the invention are not only capable of softening suitable polymers such as matrix polymers, and thus can be employed as softening agents/plasticizers, but because of their aromatic structure (since they contain lignin constituents) they can also form, in addition to hydrophobic interactions with non-polar hydrocarbons, which can be formed through their hydrophobic radicals, π- π-interactions with aromatic polymers, and can thus be present immobilized in non-polar polymers.

Further, it has been found that the compositions according to the invention are at least odor-neutral, and in particular do not have a moderate to strong, comparatively unpleasant odor. This allows their employment in a wide range of industrial applications, in particular also for such applications, where odor is otherwise disadvantageous or disturbing. This is achieved in particular by the comparatively low volatility of the compositions according to the invention.

### Detailed description of the invention

The term "comprising" in the sense of the present invention, in connection for example with the inventive composition, preferably has the meaning of "consisting of". With regard, e.g., to said composition it is possible - in addition to all mandatory constituents present therein - for one or more of the further optional constituents identified hereinafter to be also included therein. All constituents may in each case be present in their preferred embodiments as identified below.

The proportions and amounts in wt.-% (% by weight) of any of the constituents given hereinafter, which are present in the compositions, add up to 100 wt.-%, based in each case on the total weight of the composition.

The terms "organic residue(s)" and "organic radical(s)" used in the context of the present invention are interchangeable. The same applies to the respective terms "residue(s)" and "radical(s)".

### Composition comprising at least two lignin constituents A) and B)

As outlined hereinbefore a first subject-matter of the present invention is a composition comprising at least two lignin constituents A) and B) being different from each other.

The terms "lignin" and "lignin constituent" are familiar to those skilled in the art, for example from the Römpp Chemie Lexikon, 2008, Georg Thieme Verlag. Accordingly, it is known to the person skilled in the art that lignin is to be regarded as a higher-molecular derivative of phenylpropane. Depending on the type of wood, the phenyl ring of phenylpropane is substituted with one to two methoxy groups and the propane unit is substituted with hydroxy groups. In softwoods, only the guaiacyl type, and in hardwoods moreover the syringyl and coumarin types are found in the respective chemical structure of the lignins. In addition, due to various linkage possibilities, the presence of lignan and coumarin structures, cyclic ether and lactone structures is also possible. The term "lignin constituent" in the sense of the present invention preferably has the meaning of lignin derived constituent. A lignin derived constituent can for example be a i) natural lignin, which has been depolymerized such as a lignin cleavage product, and/or ii) can contain at least one kind of partial lignin structure, which has been synthesized from phenylpropane derivates.

The inventive composition is for example obtainable by modifying including hydrophobically modifying suitable lignin precursor constituents A-1) and B-1), which can be employed as starting material for such modification including hydrophobic modification. The precursors can include lignin cleavage products, which are for example obtainable by cleavages such as depolymerizations of (higher-molecular) lignins (depolymerized lignins) such as lignin biopolymers, and/or fractionated lignins, which are, for example, obtainable by fractionation processes, e.g., from a lignin side stream from an industrial process such as pulping and/or biorefining and by separation of the desired fraction. An example of a fractionation process is a membrane process, which is for instance often performed on case of black liquor. As mentioned hereinbefore and hereinafter, at least a part of the oxygen atoms originating from hydroxyl groups present in the chemical structure of at least one of constituents A) and B) of the inventive composition is covalently bonded to at least one kind of organic residues selected from organic residues comprising at least 1 and at most 22 carbon atoms. Introduction of the at least one kind of organic residues comprising at least 1 and at most 22 carbon atoms is preferably achieved by said aforementioned modification. Introduction of the at least one kind of organic residues comprising at least 5 and at most 22 carbon atoms is preferably referred to as hydrophobic modification in the sense of the present invention.

### Constituents A) and B)

Preferably, the proportion of lignin constituents A) and B) in the composition is > 70% by weight, more preferably > 75% by weight, even more preferably > 80% by weight, still more preferably > 85% by weight, in each case relative to the total weight of the composition. Preferably, the proportion of lignin constituents A) and B) in the composition is in a range from > 70 to ≤ 100% by weight, more preferably in a range from > 75 to < 99% by weight, even more preferably in a range from > 80 to < 98% by weight, still more preferably in a range from > 85 to < 97% by weight, in each case relative to the total weight of the composition.

### Weight average molecular weight (M_{w}) and polydispersity index (PDI)

The weight average molecular weight (M_{w}) of all lignin constituents being present in the composition including constituents A) and B) is > 200 g/mol. Preferably, the weight average molecular weight (M_{w}) of all lignin constituents being present in the composition including constituents A) and B) is >230 g/mol, more preferably >260 g/mol, yet more preferably >290, even more preferably >320 g/mol, still more preferably >350 g/mol, yet more preferably >380 g/mol, still more preferably >410 g/mol, even more preferably >440 g/mol, yet more preferably >470 g/mol, still more preferably >500 g/mol, most preferably >530 g/mol, wherein the upper limit of the weight average molecular weight (M_{w}) of all lignin constituents being present in the composition including constituents A) and B) preferably is <25,000 g/mol, more preferably <20,000 g/mol, still more preferably <15,000 g/mol, yet more preferably <10,000 g/mol, even more preferably <9,000 g/mol, still more preferably <8,000 g/mol, even more preferably <7,000 g/mol, still more preferably <6,000 g/mol, even more preferably <5,000 g/mol, in particular <3,000 g/mol, respectively. M_{w} is determined according to the method described hereinafter in the method section.

The polydispersity index (PDI) of all lignin constituents being present in the composition including constituents A) and B) is >1.20. Preferably, the polydispersity index (PDI) of all lignin constituents being present in the composition including constituents A) and B) is >1.25, more preferably is >1.30, yet more preferably is >1.35, even more preferably is >1.40, yet more preferably is >1.45, still more preferably is >1.50. Preferably, the upper limit of the PDI of all lignin constituents being present in the composition including constituents A) and B) is <15, more preferably is <10, yet more preferably is <7, even more preferably is <5, yet more preferably is <4, still more preferably is <3. PDI is determined according to the method described hereinafter in the method section.

### OH-groups, COOH-groups, OCHs-groups, and unsubstituted aromatic C-H bonds

The sum of aromatic and aliphatic hydroxyl groups of all lignin constituents being present in the composition including constituents A) and B) is 0 or ≤ 2.00 mmol/g. Preferably, the sum of aromatic and aliphatic hydroxyl groups of all lignin constituents being present in the composition including constituents A) and B) is 0 or < 1.75 mmol/g, more preferably 0 or < 1.50 mmol/g, even more preferably 0 or < 1.25 mmol/g, still more preferably 0 or < 1.00 mmol/g. Said sum is determined according to the method described hereinafter in the method section.

The sum of aliphatic hydroxyl groups of all lignin constituents being present in the composition including constituents A) and B) is 0 or < 0.25 mmol/g. Said sum is determined according to the method described hereinafter in the method section. If the sum of aliphatic hydroxyl groups is, e.g., precisely 0.20 mmol/g, the sum of aromatic hydroxyl groups of all lignin constituents being present in the composition including constituents A) and B) is at most 1.80 mmol/g. Preferably, the sum of aliphatic hydroxyl groups of all lignin constituents being present in the composition including constituents A) and B) is 0 or < 0.20 mmol/g, more preferably is 0 or < 0.15 mmol/g, even more preferably is 0 or < 0.10 mmol/g, still more preferably is 0 or <0.05 mmol/g.

Preferably, the sum of aromatic, preferably phenolic, hydroxyl groups of all lignin constituents being present in the composition including constituents A) and B) is 0 or < 0.75 mmol/g, more preferably is 0 or < 0.50 mmol/g, even more preferably is 0 or < 0.25 mmol/g. Said sum is determined according to the method described hereinafter in the method section. If the sum of aromatic hydroxyl groups is, e.g., precisely 0.20 mmol/g, the sum of aromatic and aliphatic hydroxyl groups of all lignin constituents being present in the composition including constituents A) and B) is < 0.45 mmol/g, since the sum of aliphatic hydroxyl groups of all lignin constituents being present in the composition including constituents A) and B) is necessarily < 0.25 mmol/g.

Preferably, the sum of carboxyl groups of all lignin constituents being present in the composition including constituents A) and B) is 0 or < 1.5 mmol/g, more preferably is 0 or < 1.3 mmol/g, even more preferably is 0 or <1.2 mmol/g, still more preferably is 0 or < 1.0 mmol/g. Preferably, the sum of carboxyl groups of all lignin constituents being present in the composition including constituents A) and B) is > 0.05 and/or < 1.2 mmol/g, more preferably is > 0.1 and/or < 1.0 mmol/g, even more preferably is > 0.2 and/or < 0.8 mmol/g. Preferably, the sum of carboxyl groups of all lignin constituents being present in the composition including constituents A) and B) is < 0.6 mmol/g, more preferably < 0.4 mmol/g. Said sum is determined according to the method described hereinafter in the method section. Preferably, said sum does not change more than 0.1 mmol/g, when the composition is exposed to an aqueous medium and subsequently dried at 105 °C.

The methoxyl group content of all lignin constituents being present in the composition including constituents A) and B) is in a range of 1.0 wt.-% to 20.0 wt.-%, based on the total weight of all lignin constituents being present in the composition including constituents A) and B). Preferably, the methoxyl group content of all lignin constituents being present in the composition including constituents A) and B) is in a range of 1.0 wt.-% to 17.5 wt.-%, more preferably of from 1.2 wt.-% to 15.0 wt.-%, even more preferably of from 1.5 wt.-% to 14.0 wt.-%, based in each case on the total weight of all lignin constituents being present in the composition including constituents A) and B). Said content is determined according to the method described hereinafter in the method section.

The number of unsubstituted aromatic C-H bonds per aromatic ring of each of the chemical structures of each lignin constituent being present in the composition including constituents A) and B) is on average ≥ 2 and ≤ 4. Said number is determined according to the method described hereinafter in the method section.

### Further parameters of the composition

Preferably, all lignin constituents being present in the composition including constituents A) and B) have a total oxygen content of 15 to 30% by weight, more preferably of 17 to 28% by weight, even more preferably of 19 to 26% by weight, based on the total weight of all lignin constituents being present in the composition including constituents A) and B). Said content is determined according to the method described hereinafter in the method section.

Preferably, ≥ 1.20 oxygen atoms, more preferably ≥ 1.35 oxygen atoms, even more preferably ≥ 1.50 oxygen atoms on average are covalently bound to at least one aromatic ring such as a phenyl ring of each lignin constituent A) and B).

Preferably, all lignin constituents being present in the composition including constituents A) and B) have a total carbon content of 63 to 75% by weight, more preferably of 64 to 74% by weight, particularly preferably of 65 to 72% by weight, based on the total weight of all lignin constituents being present in the composition including constituents A) and B).

Preferably, all lignin constituents being present in the composition including constituents A) and B) have a total hydrogen content of 6 to 10% by weight, more preferably of 6.5 to 9.5% by weight, particularly preferably of 7 to 9% by weight, based on the total weight of all lignin constituents being present in the composition including constituents A) and B). Said content is determined according to the method described hereinafter in the method section.

Preferably, the sum of oxygen, carbon and hydrogen content of all lignin constituents being present in the composition including constituents A) and B) is > 95% by weight, more preferably > 96% by weight, most preferably > 97% by weight, based on the total weight of all lignin constituents being present in the composition including constituents A) and B). Said content is determined according to the method described hereinafter in the method section.

Preferably, the composition according to the invention has a kinematic viscosity of < 100 mm²/s, more preferably < 80 mm²/s, particularly preferably < 60 mm²/s, even more preferably < 40 mm²/s at 100 °C. The kinematic viscosity is determined according to the method described hereinafter in the method section.

Preferably, the composition according to the invention has an oxidation stability, determined according to DIN EN 16091:2012, of > 100 minutes, more preferably > 200 minutes, particularly preferably > 250 minutes.

Preferably, the composition according to the invention has a water content, determined according to ASTM D6304-20, of < 5000 ppm, preferably < 1000 ppm, particularly preferably < 500 ppm or < 250 ppm or < 100 ppm, especially preferably < 50 ppm.

Preferably, the lignin constituents present in the composition according to the invention including constituents A) and B) have a glass transition temperature, determined according to ISO 11357-2:2020-08, of < 0 °C, more preferably < -10 °C. Preferably, however, the glass transition temperature is > -90 °C, even more preferably > -80 °C.

Preferably, the composition according to the invention has a flash point, determined according to ASTM D92-18, of > 180 °C, more preferably of > 200 °C. Preferably, however, the flash point is < 300 °C, more preferably < 280 °C.

### Organic residue comprising at least 1 and at most 22 carbon atoms

At least a part of the oxygen atoms originating from hydroxyl groups present in the chemical structure of at least one of constituents A) and B) is covalently bonded to at least one kind of organic residues selected from organic residues comprising at least 1 and at most 22 carbon atoms.

As outlined hereinbefore introduction of the at least one kind of organic residues comprising at least 1 and at most 22 carbon atoms is preferably achieved by a chemical modification, more preferably of suitable lignin constituent precursors such as constituents A-1) and B-1) bearing one or more OH-groups for modification. Introduction of the at least one kind of organic residues comprising at least 5 and at most 22 carbon atoms is preferably referred to as a respective hydrophobic chemical modification in the sense of the present invention, wherein the at least one kind of introduced organic residues comprising at least 5 and at most 22 carbon atoms represents the introduced hydrophobic modification.

Preferably, the at least one kind of organic residues selected from organic residues comprising at least 1 and at most 22 carbon atoms is a monovalent organic residue, more preferably a monovalent aliphatic residue.

Preferably, the at least one kind of organic and preferably aliphatic residues covalently bonded to at least part of the oxygen atoms originating from hydroxyl groups present in the chemical structure of at least one of constituents A) and B) is selected from the group consisting of monovalent organic residues that contain at least 1 and at most 20, preferably at most 18, more preferably at most 16, even more preferably at most 14, still more preferably at most 12, and/or that contain a minimum of 2, preferably a minimum of 3, more preferably a minimum of 4 or 5, even more preferably a minimum of 6, still more preferably a minimum of 10, carbon atoms, wherein said carbon atoms preferably are adjacent to one another, more preferably wherein said organic aliphatic residue is selected from the group consisting of monovalent aliphatic C₁ to C₂₂ residues and monovalent aliphatic C(=O)-H to C(=O)-C₂₁ residues, even more preferably is selected from aliphatic C₂ to C₂₀ residues and aliphatic C(=O)-C₁ to C(=O)-C₁₉ residues, yet more preferably is selected from aliphatic C₃ to C₁₈ residues and aliphatic C(=O)-C₂ to C(=O)-C₁₇ residues, still more preferably is selected from aliphatic C₄ to C₁₆ residues and aliphatic C(=O)-C₃ to C(=O)-C₁₅ residues, yet more preferably is selected from aliphatic C₆ to C₁₄ residues and aliphatic C(=O)-C₅ to C(=O)-C₁₃ residues, most preferably is selected from aliphatic C₁₀ to C₁₂ residues and aliphatic C(=O)-C₉ to C(=O)-C₁₁ residues.

Preferably, the at least one kind of organic and preferably aliphatic residues covalently bonded to at least part of the oxygen atoms originating from hydroxyl groups present in the chemical structure of at least one of constituents A) and B) is selected from the group consisting of monovalent organic residues that contain at least 2 and at most 18 carbon atoms, more preferably at least 3 and at most 16 carbon atoms, even more preferably at least 4 or 5 and at most 14 carbon atoms, still more preferably at least 6 and at most 12 carbon atoms or at most 10 carbon atoms.

### Chemical structure of lignin constituents A) and B)

Preferably, at least one of constituents A) and B) comprises at least two aromatic rings, more preferably at least two phenyl rings, in its chemical structure.

Preferably, at least one of constituents A) and B), more preferably both constituents A) and B), contains at least one structural unit of general formula (I) in its chemical structure, 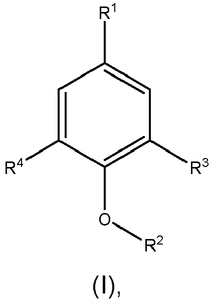
wherein in each structural unit of the general formula (I), independently from one another,
each residue R¹ is independently selected from the group consisting of H, an aliphatic C₁-C₆ residue, optionally containing one or more oxygen atoms and/or one or more sulfur atoms, an organic residue of the formula Z-OH, an organic residue of the formula Z-O-R⁵, and an at least divalent linker unit L1, through which the structural unit of the general formula (I) is chemically bonded to the at least one other structural unit of the general formula (I) or to a structural unit different therefrom,
   wherein each Z in each case independently denotes a divalent aliphatic C₁-C₆ residue, optionally containing oxygen and/or sulfur, and
   wherein each R⁵ represents an organic residue that contains at least 1, preferably at least 5, and at most 22 carbon atoms and optionally contains one or more oxygen atoms and/or one or more sulfur atoms,
   each residue R² is independently selected from H, organic residues that contain at least 1 and at most 22 carbon atoms and optionally contain one or more oxygen atoms and/or one or more sulfur atoms, and at least one divalent linker unit L2, through which the structural unit of the general formula (I) is chemically bonded to the at least one other structural unit of the general formula (I) or to a structural unit different therefrom,
   each residue R³ is independently selected from the group consisting of H, OH, an organic residue of the formula O-R⁶, and a divalent linker unit L3, through which the structural unit of the general formula (I) is chemically bonded to the at least one other structural unit of the general formula (I) or to a structural unit different therefrom,
   wherein R⁶ represents an organic residue that contains at least 1, preferably at least 5, and at most 22 carbon atoms and optionally contains one or more oxygen atoms and/or one or more sulfur atoms, and
   each residue R⁴ is independently selected from the group consisting of H, OH, an organic residue of the formula O-R⁷, and a divalent linker unit L4, through which the structural unit of the general formula (I) is chemically bonded to the at least one other structural unit of the general formula (I) or to a structural unit different therefrom,
      wherein R⁷ represents an organic residue that contains at least 1, preferably at least 5, and at most 22 carbon atoms and optionally contains one or more oxygen atoms and/or one or more sulfur atoms,
   with the proviso that at least one residue R² denotes an organic residue that contains at least 1 and at most 22 carbon atoms and/or that at least one residue R¹ denotes an organic residue of the formula Z-O-R⁵ and/or that at least one residue R³ denotes an organic residue of the formula O-R⁶ and/or that at least one residue R⁴ denotes an organic residue of the formula O-R⁷.

Preferably, at least one of constituents A) and B), more preferably both constituents A) and B), contains at least two structural units of general formula (I) in its chemical structure, wherein said at least two structural units of general formula (I) are the same or different from one another in each case, 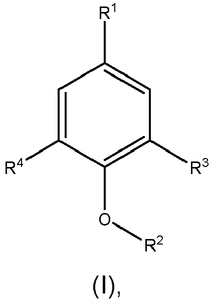
wherein, in each of the at least two structural units of the general formula (I), independently from one another, respectively,
each residue R¹ is independently selected from the group consisting of H, an aliphatic C₁-C₆ residue, optionally containing one or more oxygen atoms and/or one or more sulfur atoms, an organic residue of the formula Z-OH, an organic residue of the formula Z-O-R⁵, and an at least divalent linker unit L1, through which the structural unit of the general formula (I) is chemically bonded to the at least one other structural unit of the general formula (I) or to a structural unit different therefrom,
   wherein each Z in each case independently denotes a divalent aliphatic C₁-C₆ residue, optionally containing oxygen and/or sulfur, and
   wherein each R⁵ represents an organic residue that contains at least 1, preferably at least 5, and at most 22 carbon atoms, and optionally contains one or more oxygen atoms and/or one or more sulfur atoms,
each residue R² is independently selected from H, organic residues that contain at least 1, preferably at least 5 and at most 22 carbon atoms, and optionally contain one or more oxygen atoms and/or one or more sulfur atoms, and at least one divalent linker unit L2, through which the structural unit of the general formula (I) is chemically bonded to the at least one other structural unit of the general formula (I) or to a structural unit different therefrom,
each residue R³ is independently selected from the group consisting of H, OH, an organic residue of the formula O-R⁶, and a divalent linker unit L3, through which the structural unit of the general formula (I) is chemically bonded to the at least one other structural unit of the general formula (I) or to a structural unit different therefrom,
   wherein R⁶ represents an organic residue that contains at least 1, preferably at least 5, and at most 22 carbon atoms and optionally contains one or more oxygen atoms and/or one or more sulfur atoms, and
each residue R⁴ is independently selected from the group consisting of H, OH, an organic residue of the formula O-R⁷, and a divalent linker unit L4, through which the structural unit of the general formula (I) is chemically bonded to the at least one other structural unit of the general formula (I) or to a structural unit different therefrom,
   wherein R⁷ represents an organic residue that contains at least 1, preferably at least 5, and at most 22 carbon atoms and optionally contains one or more oxygen atoms and/or one or more sulfur atoms,
with the proviso that the at least two structural units of the general formula (I) are chemically bonded to one another through at least one of the linker units L1, L2, L3 or L4, and
with the further proviso that at least one residue R² in at least one structural unit of general formula (I) denotes an organic residue that contains at least 1 and at most 22 carbon atoms and/or that at least one residue R¹ in at least one structural unit of general formula (I) denotes an organic residue of the formula Z¹-O-R⁵ and/or that at least one residue R³ denotes an organic residue of the formula O-R⁶ and/or that at least one residue R⁴ denotes an organic residue of the formula O-R⁷.

If a residue optionally contains one or more oxygen atoms, it preferably contains at least one of C(=O)-groups, C(=O)OH-groups, and ether groups (C-O-C-groups). If a residue optionally contains one or more sulfur atoms, it preferably contains at least one of C(=S)-groups, and thioether groups (C-S-C-groups).

Preferably, relative to each structural unit of the general formula (I) present in the chemical structure of at least one of constituents A) and B), the sum of the organic residues containing at least 1, preferably at least 5, and at most 22 carbon atoms, more preferably the sum of residues R¹, R², R³ and R⁴, in which R¹ represents an organic residue of the formula Z-O-R⁵, in which R² represents an organic residue that contains at least 1, preferably at least 5, and at most 22 carbon atoms and optionally contains one or more oxygen atoms and/or one or more sulfur atoms, in which R³ represents an organic residue of the formula O-R⁶, and in which R⁴ represents an organic residue of the formula O-R⁷, is > 0.20, more preferably > 0.30, yet more preferably > 0.35, even more preferably > 0.50, even more preferably > 0.65, on average. It is clear to the person skilled in the art in this regard that the sum of the aforementioned radicals, relative to each structural unit of the general formula (I) present in the chemical structure of at least one of constituents A) and B), i.e., per structural unit of the general formula (I), in which R¹, R², R³ and R⁴ have the aforementioned meanings, which is on average is > 0.20, represents a quotient. This quotient can be calculated from the sum of those radicals within the positions R¹, R², R³ and R⁴, in which an organic radical is realized within R¹, R², R³ and R⁴, which has at least 5 and at most 22 carbon atoms, preferably as a result of which a hydrophobic modification has taken place in each case. The abovementioned sum represents the numerator of such a quotient, and the sum of all the structural units of the general formula (I) being the denominator of such a quotient. For example, if a total of two structural units of the general formula (I) are present in a lignin constituent such as constituents A), each of which has an organic radical containing at least 1 or at least 5 and at most 22 carbon atoms, or of which only one comprises two such organic radicals and the other comprises no such organic radicals, then on average, taking into account all the structural units of the general formula (I) present, there is a quotient as mentioned hereinabove, per structural unit of the general formula (I), which has a value of 2 in the numerator (a total of two organic radicals present having at least 5 and at most 22 carbon atoms) and a value of 2 in the denominator (a total of two structural units of the general formula (I) present), i.e. a value of exactly 1 and thus, in this example, > 0.65. For example, if a total of four structural units of the general formula (I) are present in the product, three of which each have an organic radical containing at least 5 and at most 22 carbon atoms, or if one structural unit of the general formula (I) comprises two such organic radicals and one of the others has one such organic radical, then on average, taking into account all the structural units of the general formula (I) present, there is a quotient as mentioned hereinabove, per structural unit of the general formula (I), which has a value of 3 in the numerator (a total of three organic radicals present with at least 5 and at most 22 carbon atoms) and a value of 4 in the denominator (a total of four structural units of the general formula (I) present), i.e. a value of 3/4 = 0.75 and thus, in this example, > 0.65. A method for determining said quotient is disclosed in the 'methods' section.

Each of lignin constituents A) and B) preferably contains up to and including six, preferably up to and including five structural units of the general formula (I), i.e. at least two, at least three, at least four or at most five or at most six structural units of the general formula (I), which are in each case identical to or different from one another, wherein in each case at least two, particularly preferably at least three or four or up to five or up to six of the structural units of the general formula (I) are chemically bound to one another through at least one of the linkers L1, L2 and L3 or L4, preferably through at least one of the linkers L1 or L3 or L4, respectively, particularly preferably through at least one linker L3 or L4, respectively, in particular through at least one linker L4, respectively. Alternatively, however, it is also preferably possible for each of lignin constituents A) and B) to contain up to and including ten, particularly preferably up to and including eight structural units of the general formula (I).

Preferably, in at least one of constituents A) and B), more preferably in both, at least one residue R¹ of at least one structural unit of general formula (I) represents an organic residue of the formula Z-O-R⁵, wherein each Z in each case independently denotes a divalent aliphatic C₁-C₆ residue, optionally containing oxygen and/or sulfur, and wherein each R⁵ represents an organic residue that contains at least 1, preferably at least 5, and at most 22 carbon atoms and optionally contains one or more oxygen atoms and/or one or more sulfur atoms.

Preferably, in at least one of constituents A) and B), more preferably in both, at least one residue R² of at least one structural unit of general formula (I) represents an organic residue that contains at least 1, preferably at least 5, and at most 22 carbon atoms and optionally contain one or more oxygen atoms and/or one or more sulfur atoms.

At least two structural units of the general formula (I) are preferably bound to one another chemically through at least one of the linkers L1, L2, L3 or L4 in case of at least one of lignin constituents A) and B). In this context, it is possible that at least two structural units of the general formula (I) are chemically bound to one another through more than one of the linkers L1, L2, L3 or L4, for example through two of the linkers L1, L2, L3 or L4.

Each of the linkers L1, L2 and L3 as well as L4 can chemically bond at least two structural units of the general formula (I). Each of the linkers L1 to L4, in particular at least one of the linkers L3 and/or L4, can, for example, stand for a single bond by means of which two structural units of the general formula (I) are directly bound to one another, i.e., by means of which the phenyl rings of the two structural units of the general formula (I) are chemically bound to one another in the sense of a biphenyl bond. Preferably, the linkers L1, L2 and L3 and L4 are selected independently from one another in such a way that each of these linkers represents a residue consisting of 1 to 10, such as 1 to 4, consecutive and interconnected atoms, wherein these radicals may be alicyclic or cyclic. Preferably, each of the linkers L1, L2 and L3 as well as L4 contains at least one carbon atom, although, for example a divalent heteroatom such as an oxygen atom may alternatively act as a linker. Alternatively, as mentioned above, also single bonds can be used as linker. Preferably, each of the linkers L1, L2 and L3, as well as L4, contains at least two, and particularly preferably at least three, carbon atoms. Preferably, the linkers L1, L2 and L3 as well as L4 each independently from one another stand for divalent linkers, particularly preferably for divalent aliphatic radicals such as aliphatic C₁-C₃ radicals that may optionally contain one or more heteroatoms.

Preferably, linker units L1, L2 and L3 as well as L4 independently from one another, respectively, link at least two of structural units of the general formula (I) directly to one another through a single bond, or by means of a preferably divalent organic residue as linker unit that contains at least one carbon atom and/or heteroatom, preferably oxygen and/or sulfur atom, more preferably oxygen atom. Preferably, said preferably divalent organic residue serving as linker unit denotes an aliphatic residue, more preferably aliphatic C₁-C₃ residue that optionally may contain one or more oxygen and/or sulfur atoms.

Preferably, the proportion of structural units of general formula (I) in at least one of constituents A) and B) is in a range from > 70 to ≤ 100% by weight, more preferably in a range from > 75 to < 99% by weight, even more preferably in a range from > 80 to < 98% by weight, still more preferably in a range from > 85 to < 97% by weight, in each case relative to the total weight of all lignin constituents being present in the composition including constituents A) and B).

Preferably, at least one of constituents A) and B) contains at least one structural unit of the general formula (II) which comprises at least two structural units of the formula (I) that are linked to each other through linker unit L3, 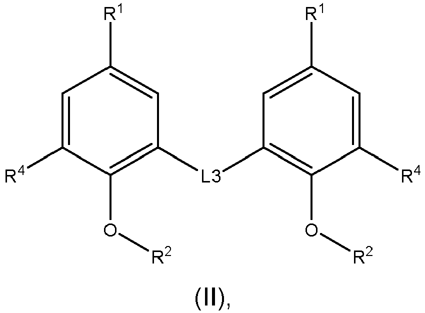 wherein the residues R¹, R², R⁴ and linker L3 have the same meanings as defined hereinbefore and hereinafter.

Preferably, the proportion of structural units of the general formula (I) in each of lignin constituents A) and B) of the composition according to the invention is > 70% by weight, more preferably > 75% by weight, even more preferably > 80% by weight, still more preferably > 85% by weight, in each case relative to the total weight of each of the lignin constituents A) and B). Preferably, the proportion of structural units of the general formula (I) in each of lignin constituents A) and B) of the composition according to the invention is in a range from > 70 to ≤ 100% by weight, more preferably in a range from > 75 to < 99% by weight, even more preferably in a range from > 80 to < 98% by weight, still more preferably in a range from > 85 to < 97% by weight, in each case relative to the total weight of each of the lignin constituents A) and B).

Accordingly, each of lignin constituents A) and B) of the composition according to the invention may have one or more structural units different from the structural unit of the general formula (I), each of which may be identical to or different from one another, wherein the proportion of these structural units different from the structural unit of the general formula (I) preferably in case of each of lignin constituents A) and B) is in a range from ≤ 30 to 0% by weight, more preferably from ≤ 25 to ≥ 1% by weight, even more preferably from ≤ 20 to ≥ 2% by weight, still more preferably from ≤ 15 to ≥ 3% by weight, in each case relative to the total weight of each of lignin constituents A) and B). Preferably, at least 50% by weight of the one or more structural units different from the structural unit of the general formula (I), relative to the total weight of these structural units, have the same basic structure as the structural unit of the general formula (I). By basic structure, in the sense of the present invention, is meant a tetra-substituted phenol ring as in the case of the structural unit of general formula (I). Preferably, each of these structural units, that differ from the structural unit of the general formula (I) has a phenol ring as the basic structure, of whose four substituents at least one radical has a meaning which cannot be subsumed under any of the definitions of the radicals R¹ to R⁴. Preferably, up to 20% by weight of the further one or more structural units different from the structural unit of the general formula (I), relative to the total weight of the structural units different from the structural unit of the general formula (I), have groups resulting from the method of obtaining the lignin precursor constituents A-1) and B-1) employed to prepare the composition according to the invention, in particular in step 1) of the process of the invention (for example sulfur groups if kraft lignin is used, ethyl ether groups if Organosolv lignin is used, acetic ester groups if Acetosolv lignin is used, etc.).

Preferably, up to 5% by weight of the further one or more structural units different from the structural unit of the general formula (I), relative to the total weight of the structural units different from the structural unit of the general formula (I), have oxidized aromatic rings such as phenol rings, e.g., quinones.

Preferably, the individual aromatic rings of the structural units including structural units (I) bound through linkers have a non-condensed structure.

### Further optional constituent(s)

Preferably, the content of any non-lignin constituents, which preferably are monomeric constituents, in the composition, which contain an organic residue comprising at least 1 and at most 22 carbon atoms, is below 5 wt.-% or below 4 wt.-% or below 3 wt.-%, more preferably below 2 wt.-%, still more preferably below 1 wt.-%, yet more preferably below 0.5 wt.-%, in each case based on the total weight of the composition. Examples of non-lignin constituents are chemical modification agents that had been used in excess for the chemical modification of the lignin precursor constituents A-1) and B-1).

### Process for preparing the inventive composition

A further subject-matter of the present invention is a process for preparing the inventive composition, which comprises at least steps 1) and 2). The process may comprise one or more further optional steps, for instance optional step 3) defined hereinafter.

All preferred embodiments described hereinabove in connection with the composition according to the invention are also preferred embodiments with regard to the aforementioned process according to the invention.

### Step 1)

In step 1) a precursor composition comprising at least two lignin precursor constituents A-1) and B-1) being different from each other is provided, wherein the weight average molecular weight (M_{w}) of all lignin precursor constituents being present in the precursor composition including precursor constituents A-1) and B-1) is lower than the weight average molecular weight (M_{w}) of all lignin constituents being present in the composition obtained after step 2) including at least constituents A) and B), wherein at least one, preferably both, of two lignin precursor constituents A-1) and B-1) bear one or more hydroxyl groups.

Preferably, in step 1), at least two lignin precursor constituents A-1) and B-1) are provided as starting material, which in turn can be provided by processes for decomposing lignin biopolymers or lignin-containing material streams, such as by (hydro)pyrolysis, base-catalyzed depolymerization, enzymatic depolymerization, and/or acid-catalyzed depolymerization.

The aforementioned starting material that can be employed in step 1) can also be obtained by forming carbon-carbon bonds between lignin monomers, dimers, and oligomers (>2 monomers). In addition, other molecules/compounds may be formed as well, especially when lignin-containing material streams are employed. Their content can be reduced by targeted distillation.

Preferably, at least one of precursor constituents A-1) and B-1) contains at least one structural unit of general formula (Ia) in its chemical structure, 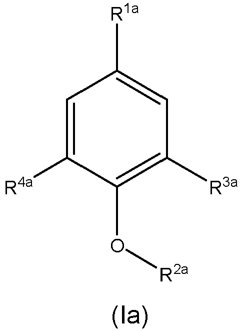
wherein in each structural unit of the general formula (Ia), independently from one another, respectively,
each residue R^{1a} is independently selected from the group consisting of H, an aliphatic C₁-C₆ residue, optionally containing one or more oxygen atoms and/or one or more sulfur atoms, an organic residue of the formula Z-OH, and an at least divalent linker unit L1, through which the structural unit of the general formula (Ia) is chemically bonded to the at least one other structural unit of the general formula (Ia) or to a structural unit different therefrom,
   wherein each Z in each case independently denotes a divalent aliphatic C₁-C₆ residue, optionally containing oxygen and/or sulfur, and
each residue R^{2a} is independently selected from H, OH, and at least divalent linker unit L2, through which the structural unit of the general formula (Ia) is chemically bonded to the at least one other structural unit of the general formula (Ia) or to a structural unit different therefrom,
each residue R^{3a} is independently selected from the group consisting of H, OH and OCH₃, preferably selected from the group consisting of H and OH, and a divalent linker unit L3, through which the structural unit of the general formula (Ia) is chemically bonded to the at least one other structural unit of the general formula (Ia) or to a structural unit different therefrom, and
each residue R^{4a} is independently selected from the group consisting of H, OH and OCH₃, preferably selected from the group consisting of H and OH, and a divalent linker unit L4, through which the structural unit of the general formula (Ia) is chemically bonded to the at least one other structural unit of the general formula (Ia) or to a structural unit different therefrom,
preferably with the proviso that at least one residue R^{2a} denotes OH and/or that at least one residue R^{1a} denotes an organic residue of the formula Z-OH and/or that at least one residue R^{3a} denotes OH and/or that at least one residue R^{4a} denotes OH,
wherein at least part of the OH groups present in the structural unit of the general formula (Ia) of at least one of lignin precursor constituents A-1) and B-1) is reacted with the agent employed in step 2) of the process.

Preferably, at least one, preferably both, of precursor constituents A-1) and B-1) contains at least two structural units of general formula (Ia) in its chemical structure, wherein said at least two structural units of general formula (Ia) are the same or different from one another, and wherein in each case, in each of the at least two structural units of the general formula (Ia), independently from one another, respectively, each of residues R^{1a}, R^{2a}, R^{3a} and R^{4a} as well as Z has the meaning defined hereinbefore,
with the provision that the at least two structural units of the general formula (Ia) are chemically bonded to one another through at least one of the linker units L1, L2, L3 or L4, and
with the further proviso that at least one residue R^{2a} denotes OH and/or that at least one residue R^{1a} denotes an organic residue of the formula Z-OH and/or that at least one residue R^{3a} denotes OH and/or that at least one residue R^{4a} denotes OH.

### Step 2)

In step 2) at least part of the hydroxyl groups of at least one of lignin precursor constituents A-1) and B-1) are reacted with at least one agent containing at least one kind of organic residues selected from organic residues that in turn contain at least 1 and at most 22 carbon atoms and optionally contain one or more oxygen atoms and/or one or more sulfur atoms, and include at least one reactive functional group that can react with at least part of the hydroxyl groups of at least one of the lignin precursor constituents A-1) and B-1) such that covalent bonds between at least a part of the oxygen atoms of the hydroxyl groups of at least one of lignin precursor constituents A-1) and B-1) and the at least one organic residue comprising at least 1 and at most 22 carbon atoms originating from the agent used are formed, wherein after having performed step 2) the composition comprising the at least two lignin constituents A) and B) is obtained.

In step 2), at least part of the hydroxyl groups of at least one of lignin precursor constituents A-1) and B-1) are reacted with at the least one chemical agent, preferably more than 0.65 OH groups present on average per structural unit of the general formula (Ia) are reacted in this manner. The at least one chemical agent contains at least 1 and at most 22 carbon atoms and optionally contains one or more oxygen atoms and/or one or more sulfur atoms, and includes at least one reactive functional group that can react with at least part of the hydroxyl groups of at least one of the lignin precursor constituents A-1) and B-1) such that covalent bonds between at least a part of the oxygen atoms of the hydroxyl groups of at least one of lignin precursor constituents A-1) and B-1) and the at least one organic residue comprising at least 1 and at most 22 carbon atoms originating from the agent used are formed.

The at least one and preferably exactly one reactive group of the chemical agent employed is preferably selected from the group consisting of preferably organic acid groups, anhydrides, halides and esters of these acid groups, epoxide groups, alcohol groups, thiol groups, isocyanate groups, and mixtures thereof, more preferably is selected from the group consisting of preferably organic acid groups and salts, anhydrides, halides and esters of these acid groups, epoxide groups, and mixtures thereof. Examples of acid groups include carboxylic acid groups, sulfonic acid groups, phosphonic acid groups, and phosphoric acid groups. Carboxylic acid groups and phosphoric acid groups and their respective salts, anhydrides, halides, and esters, as well as epoxide groups are particularly preferred. Most preferred are carboxylic acids, anhydrides, and esters.

### Optional step 3)

According to step 3) optionally a refining step 3) may be carried out to separate any constituents possibly contained in the composition obtainable after step 2) which have a boiling point of < 220 °C (at 1.013 mbar), preferably of < 210 °C, particularly preferably of < 200 °C (at 1.013 mbar, respectively). Preferably, the refinement according to optional step 3) represents a distillation and/or rectification.

Preferably, the optional step 3) is carried out at a temperature of < 250 °C, further preferably < 200 °C, particularly preferably < 180 °C, preferably in each case at a pressure of < 5 mbar, preferably < 1 mbar, particularly preferably < 0.1 mbar.

### Mixture

A further subject-matter of the present invention is a mixture of at least one inventive composition or at least one composition obtainable by the inventive process and at least one preferably non-polar hydrocarbon such as at least one oil.

All preferred embodiments described hereinabove in connection with the composition according to the invention and the process according to the invention are also preferred embodiments with regard to the aforementioned mixture according to the invention.

### Use

A further subject-matter of the present invention is a use of at least one inventive composition or at least one composition obtainable by the inventive process in polymer-containing formulations, coating formulations, pharmaceutical formulations, and cosmetic formulations, preferably as plasticizer (softening agent), plasticizer oil, and/or process oil, respectively. A use as a softening/plasticizing oil is particularly preferred when the composition is a cosmetic composition.

A further subject-matter of the present invention is a use of at least one inventive composition per se or at least one composition obtainable by the inventive process for treatment of a surface of a substrate. For examples, the surface can be metallic, made of glass, made of at least one kind of plastic, or made of paper. Preferably, a film is formed on said surface by said treatment.

All preferred embodiments described hereinabove in connection with the composition according to the invention, the process according to the invention, and the inventive mixture are also preferred embodiments with regard to the aforementioned use according to the invention.

In this context, the pharmaceutical formulations, coating formulations, and cosmetic formulations mentioned hereinabove do not contain polymers. Polymer-containing pharmaceutical, coating, and cosmetic formulations, on the other hand, represent further examples of polymer-containing formulations and can then be subsumed under the generic term polymer-containing formulations in case they contain at least one polymer. The polymer in each case is different from any lignin constituent present in the inventive composition including lignin constituents A) and B). Examples of coating formulations, which do not contain a polymer, are, e.g., formulations, which contain at least one kind of prepolymer. Examples of suitable prepolymers are, e.g., radiation curable prepolymers, in particular UV curable prepolymers.

In case of coating formulations that are radiation curable, the at least one kind of organic residues selected from organic residues comprising at least 1 and at most 22 carbon atoms, which is present in the chemical structure of at least one of constituents A) and B), preferably comprise at least one ethylenically unsaturated group, more preferably at least one vinyl group.

Preferably, the polymer-containing formulations are selected from the group consisting of rubber formulations, coating material formulations, pharmaceutical formulations, and cosmetic formulations. Coating material formulations can be, e.g., used for forming a coating film or layer on a surface of a substrate. For examples, the surface can be metallic, made of glass, made of at least one kind of plastic, or made of paper.

Examples of cosmetic formulations are personal care products.

### Formulation

A further subject-matter of the present invention is a formulation, which is selected from polymer-containing formulations, coating formulations, pharmaceutical formulations, and cosmetic formulations, wherein said formulation contains at least one inventive composition. The terms polymer-containing formulations, coating formulations, pharmaceutical formulations, and cosmetic formulations have been explained hereinbefore.

A further subject-matter of the present invention is a polymer formulation, preferably a rubber formulation comprising at least one polymer, preferably at least one rubber, and at least one inventive composition or at least one composition obtainable by the inventive process, wherein the polymer formulation preferably further comprises at least one filler, particularly when the polymer formulation is a rubber formulation, preferably a vulcanizable rubber formulation. Preferably, the inventive composition therein functions as softening agent/plasticizer, plasticizing/softening oil, and/or process oil. Preferably, the polymer formulation is selected from the group consisting of coating formulations, rubber formulations, (polymer-containing) pharmaceutical formulation and (polymer-containing) cosmetic formulations.

All preferred embodiments described hereinabove in connection with the composition according to the invention, the process according to the invention, the inventive mixture, and the inventive use, are also preferred embodiments with regard to the aforementioned formulation according to the invention.

Examples of fillers are carbon black and/or silica and/or organic fillers based on renewable raw materials, for example lignin-based fillers.

Preferably, the at least one polymer is at least one thermoplastic polymer, more preferably at least one thermoplastic polymer, which is selected from the group comprising polyethylene (PE), polypropylene (PP), polystyrene (PS), polyethylene terephthalate (PET), acrylonitrile butadiene styrene (ABS), polybutylene terephthalate (PBT), polyamide (PA), polylactic acid (PLA), polyacrylate and polyacrylate copolymers, polymethacrylate and polymethacrylate copolymers, as well as mixtures thereof, and halogenated thermoplastic such as polyvinyl chloride (PVC).

Preferably, the composition according to the invention is present in a polymer formulation in an amount of from 10 to 60% by weight, preferably from 10 to 50% by weight, more preferably from 10 to 40% by weight, in particular from 15 to 30% by weight.

Preferably, the at least one polymer is at least one rubber and the resulting rubber formulation is preferably vulcanizable. Preferably, the resulting rubber formulation is vulcanized and is present as a vulcanized rubber formulation.

Preferably, the composition according to the invention is present in the rubber formulation in an amount of from 10 to 60 phr, preferably from 5 to 50 phr, more preferably from 10 to 40 phr, in particular from 15 to 30 phr.

Any type of rubber is suitable for the preparation of the rubber formulations according to the invention. Natural rubber (NR) and synthetic rubbers are familiar to the person skilled in the art. Those skilled in the art know that synthetic rubbers can be mineral oil based or bio-based. Preferably, the at least one rubber is selected from the group consisting of natural rubber (NR), halobutyl rubbers, in turn preferably selected from the group consisting of chlorobutyl rubbers (CIIR; chloro-isobutene-isoprene rubber) and bromobutyl rubbers (BIIR; bromo-isobutene-isoprene rubber), butyl rubber or isobutylene-isoprene rubber (IIR; isobutene-isoprene-rubber), styrene-butadiene rubber (SBR), in turn preferably SSBR (solution-polymerized SBR and/or ESBR (emulsion-polymerized SBR), polybutadiene (BR, butadiene rubber), acrylonitril-butadiene-rubbers (NBR, nitrile rubber) and/or HNBR (hydrated NBR), chloroprene (CR), polyisoprene (IR), ethylene-propylene-diene rubber (EPDM), polyacrylic elastomers (ACM), ethylene acrylic elastomers (AEM), chlorinated polyethylene rubber (CM), chlorosulfonated polyethylene rubber (CSM), epichlorohydrin-ethyleneoxid copolymer (ECO), epichlorohydrin homopolymer (CO), epichlorohydrin ethyleneoxide, diene terpolymer (ETER), ethylene vinyl acetate rubber (EVM), isoprene-butadiene rubber (IBR), liquid butadiene rubber (L-BR), liquid farnesene rubber (L-FR), liquid polyisoprene rubber (L-IR), liquid styrene-butadiene-rubber (L-SBR), polyisobutylene (PIB), polynorbornene rubber (PNR), polyurethane rubber (PU), styrene-isoprene-butadiene rubber (SIBR), polysulfide rubber, thermoplastic polylefins (TPO), thermoplastic vulcanizates (TPV), thermoplastic styrene copolymers (TPS), thermoplastic polyurethane (TPU), thermoplastic polyamide (TPA), polyolefin elastomer (POE), and thermoplastic copolyester (TPC), as well as mixtures thereof.

Particularly preferably, the at least one rubber is selected from the group consisting of styrene-butadiene rubber (SBR), again preferably SSBR, polybutadiene (BR, butadiene rubber), EPDM, NR, and acrylonitrile-butadiene rubbers (NBR, nitrile rubber), as well as mixtures thereof. Particularly preferred are styrene-butadiene rubber (SBR), again preferably SSBR and polybutadiene (BR, butadiene rubber) as well as mixtures thereof.

The rubber formulation may moreover preferably contain at least one vulcanization system that comprises at least one cross-linking agent. Examples for such cross-linking agents are sulfur and/or peroxide, in particular sulfur.

### METHODS

### 1. Molecular weight distribution including weight average molecular weight and polydispersity index

Samples from lignin constituents such as constituents obtainable from depolymerized lignins were dissolved with 10 mg/mL in LiBr/DMSO (0.5% w/v) and filtered through a 0.45 µm PTFE syringe filter. The analysis of the molecular weight distribution was done by means of multi-angle light scattering (MALS) 785 nm detector in accordance with G. Zinovyev et al., ChemSusChem 2018, 11, 3259-3268. The specific refractive index increment (dn/dc)µ of 0.150 was used in molar mass calculations. Separation was performed using gel permeation chromatography (GPC) with an Agilent PolarGel M guard column (7.5 x 50 mm) and three PolarGel M columns 7.5 x 300 mm (5 µm particle size) at 35°C with 0.5 mL min⁻¹ flow rate and 10 µL sample injection volume. Samples from lignin model dimers as lignin constituents were dissolved in LiBr/DMSO (0.1% w/v) and filtered through a 0.45 µm PTFE syringe filter. Separation was performed in gel permeation chromatography (GPC) with an Agilent PolarGel M guard column (7.5 x 50 mm) and two PolarGel M columns 7.5 x 300 mm at 60°C with 0.5 mL min⁻¹ flow rate. Glucose and PEG standards (180 - 82,250 g/mol, Agilent) were used as reference for RI/UV detection.

### 2. Aromatic hydroxyl groups, aliphatic hydroxyl groups and carboxylic acid groups

The number of aromatic hydroxyl groups, the number of aliphatic hydroxyl groups as well as the number of carboxylic acid groups, each in mmol/g, were each determined by means of ³¹P-NMR in accordance with M. Zawadzki et al., Holzforschung 2001, 55, 283-285 using 2-chloro-4,4,5,5-tetramethyl-1,3,2-dioxaphospholane for phosphitylation and endo-N-hydroxy-5-norbornene-2,3-dicarboximide (set at 151.9 ppm) as internal standard. Acquisition parameters included: 25 °C, acquisition time 1.0 s and a 20 s delay between pulses. Spectra were processed with ACD/Spectrus Processor (lb = 3 Hz, phase, and baseline correction). Aromatic OH, especially guaiacyl-OH, were quantified from the integral at 136-144.5 ppm and 138-141 ppm, respectively. Aliphatic OH were integrated at 145-149.5 ppm and carboxylic acids at 136-138 ppm. The respective sums were determined as well by this method.

### 3. Methoxyl group content

Methoxyl group content was determined according to I. Sumerskii et al., RSC Advances 2017, 7, 22974-22982. The sample to be investigated was treated in HI at 110 °C for 3 h and the methyl iodide content was determined by GC/MS.

### 4. Number of unsubstituted aromatic C-H bonds per aromatic ring

¹³C NMR spectra were measured adapting a protocol from E. A. Capanema et al., J. Agric. Food Chem. 2004, 52, 7, 1850-1860. The sample to be investigated was dissolved in DMSO-d6 followed by addition of chromium(III)acetylacetonate as relaxation agent and trioxane as internal standard. Acquisition parameters included: inverse gated decoupling, 1.4 s acquisition time and a 2.0 s delay between pulses. Spectra were processed with ACD/Spectrus Processor (lb = 3 Hz, phase and baseline correction). The number of unsubstituted aromatic C-H bonds per aromatic ring is defined as the ratio of integrals between 100-130 ppm and 100-165 ppm when setting the latter integral of all aromatic C as 6 (solvent peak at 39.5 ppm).

### 5. TC90 and maximum torque

The reaction kinetics of non-vulcanized rubber compositions were determined using an MDR 3000 Professional rheometer from MonTech Werkstoffprüfmaschinen GmbH by determining the time course of the torque according to DIN 53529. The minimum and maximum torque were determined from the measurement curves within a 30-minute test phase with 0.5° deflection and 1.67 Hz. The minimum torque is defined as 0% of the maximum torque and the maximum torque is normalized as 100%. The time period is determined when the torque reaches 90% of the maximum torque (TC90).

### 6. Tensile strength and elongation at break

The determination of tensile strength and elongation at break of the vulcanized rubber composition was carried out in accordance with ISO 37:2011 using a testing instrument of the Tensor Check type from the company Gibitre Instruments. Five dumbbell type 2 specimens were cut from the vulcanized rubber sheet with a die cutter according to ISO 23529 and tested at RT using a test speed of 500 mm/min.

### 7. Hardness

The determination of the Shore A hardness of vulcanized rubber compositions was carried out in accordance with ISO 7619-1, using a digital Shore hardness tester from the company Sauter GmbH on three S2 bars, punched out to perform the tensile test according to ISO 53504 and placed on top of one another. Hardness measurements were carried out at five different locations on the stack.

### 8. Ageing

The ageing properties were investigated by artificial ageing according to DIN 53508 at 100 °C in air for 7 and 28 days and subsequent determination of tensile strength and elongation at break as well as hardness (see above).

### 9. Determination of kinematic viscosity

The determination is carried out following the Stabinger method according to DIN EN 16896:2017.

### 10. Determination of oxidation stability

The determination is carried out according to DIN EN 16091:2012. Sample was treated with 7 bars of oxygen at 140°C.

### 11. Determination of elemental composition

The determination is carried out according to DIN 51732:2014-07 and is used to determine the carbon and hydrogen content. Dried samples were burnt with an oxygen containing atmosphere at 950°C and CO₂ and water was detected.

### 12. Determination of water content

The determination is carried out according to ASTM D6304-20 by means of Karl Fischer titration.

### 13. Determination of glass transition temperature

The determination is carried out according to ISO 11357-2:2020-08 by means of DSC in the temperature range -120 to 300 °C at a heating rate of 20 K/min.

### 14. Determination of flash point

The determination is carried out according to ASTM D92-18.

### 15. Determination of solubility/miscibility

Solubility is investigated at room temperature (23 °C). For this purpose, 0.2 g of the material to be tested is dosed with 0.8 g of medium in a 2 ml screw-cap glass and shaken vigorously for 5 s. Solubility is also determined at 80 °C, by dosing 0.2 g of the material to be tested with 0.8 g of medium in a 2 ml screw-cap glass, tempering at 80 °C for 2 min in an air circulation drying cabinet, and shaking vigorously for 5 s. The miscibility of the phases is evaluated visually, wherein a 2-phase system and a fine distribution of one phase in the other, indicated by turbidity, is evaluated as immiscible or not completely soluble. n-hexane, toluene and paraffin oil are employed as the medium. The solubility and thus the dissolved fraction, i.e., particularly the content of hydrophobically modified lignin cleavage product (in the case according to the invention) in the medium employed can, if necessary, be further investigated by UV spectroscopy at about 280 nm, in particular to quantify the dissolved fraction.

### 16. Quotient of the sum of organic residues

This quotient such as of the sum of organic residues per structural unit of the general formula (I), is calculated by dividing an exemplary integral of a carbon atom of the organic residue (e.g. at around 15 ppm for an endwise methyl group) by the average amount of structural units, which is quantified by integral of the signals at 100-165 ppm divided by 6 for the number of aromatic C per structural unit of the general formula (I).

### EXAMPLES

The following examples serve to explain the invention, but should not be interpreted restrictively.

### Example 1

The monomeric starting compound 4-propylguaiacol was first dimerized to give the corresponding dimer (material B). For this, 1.81 moles (300 g) of 4-propylguaiacol and 1.35 moles of formaldehyde as a 23.5% solution (161.7 ml) were brought to condensation using 13.3 ml of a 0.25 M sulfuric acid for 8 h at 95 °C in a round bottom flask under N₂ and vigorous stirring. After cooling the reaction, the unreacted aqueous formalin and the 4-propylguaiacol were removed in a vacuum distillation at 1 mbar and 150°C.

The product obtained (material B) gave an R_{f} value of 0.16 in thin-layer chromatography with ethyl acetate-heptane (2:8). The monomer propylguaiacol has an R_{f} value of 0.48 in the same mobile solvent. Material B is immiscible in the three media toluene, hexane and paraffin oil, since it remains in the form of a sediment instead. A hydrophobized low-molecular lignin (material C) was produced from material B according to the formulation shown in Table 1.

**Tab. 1**

| | | |
|---|---|---|
| Hexanoic acid anhydride | m [g] | 492 |
| | V [ml] | 529.0 |
| | n [mmol] | 2295.8 |
| | Excess | 3.2 |
| Pentanoic acid anhydride | m [g] | 492 |
| | V [ml] | 523.4 |
| | n [mmol] | 2641.6 |
| | Excess | 3.7 |
| 1-Methyl imidazole | m [g] | 24.6 |
| | V [ml] | 23.88 |
| | n [mmol] | 299.6 |
| Material employed | | Material C |
| | m [g] | 246 |
| | n [mmol] | 714.2 |
| T | [°C] | 65 |
| Time | [h] | 24 |

Here, the material employed was dispersed or dissolved in the mixture of acid anhydrides and catalyst (1-methyl imidazole) and stirred at the conditions listed. Subsequently, the unreacted anhydrides, acids and the catalyst were removed in a vacuum distillation at 1 mbar and 150 °C to give a liquid (material C).

When the dissolution behavior was investigated at 80 °C, a homogeneous phase was formed from the material C obtained after distillation and one of the three media toluene, hexane, and paraffin oil, respectively. When either toluene or hexane was employed, a homogeneous solution was already present at room temperature. After cooling from room temperature, the homogeneous solution persisted. Consequently, material C was evaluated as miscible.

A residual guaiacyl-OH content of 0.0 mmol/g, an aromatic and aliphatic hydroxyl group content of in total 0.0 mmol/g and an aliphatic hydroxyl group content of 0.0 mmol/g was measured for material C. Material C has a weight-average molecular weight of 240 g/mol, a PDI of 1.3, a methoxyl group content of 6.0 wt.-% and a number of unsubstituted aromatic C-H bonds per aromatic ring of 3.0.

### Example 2

The material C obtained after distillation according to example 1 was employed in an sSBR/BR rubber formulation, in comparison with the commercially available product Vivatec 500. The mixing was carried out in a Haake Rheomix 3000 S with Banbury rotors from ThermoFischer, with the quantities given in Tab. 2.1.

**Tab. 2.1**

| Component | | Proportion [phr] |
|---|---|---|
| sSBR | Sprintan SLR 4602 | 80 |
| BR | Buna CB24 | 20 |
| Filler | Carbon black N550 | 80 |
| Stearic acid | Palmera B1805 | 2 |
| Softening agent | Vivatec 500 or Material C | 25 |
| Zinc oxide | "Weißsiegel" quality | 4 |
| Stabilizer | IPPD | 1.5 |
| Stabilizer | Negozone 3457 | 1 |
| Accelerator | Avorator CBS 80 | 1.88 |
| Cross-linking agent | Struktol SU95 | 1.5 |

A sheet was rolled out from the vulcanizable rubber compositions to a thickness of 3 mm, by successively reducing the gap width of a laboratory roller. A square with the dimensions of 250 x 250 mm and a thickness of 2 mm was then cut from this sheet and transferred to the vulcanization press from Gibitre Instruments vulcanization press to form a test plate. The vulcanization time to be set results from the t90 time determined in the rheometer test plus one minute per millimeter of plate thickness. The vulcanized rubber sheet was immediately removed after the pressing time had elapsed. The plate was cooled on a steel cooling table. The vulcanization properties and mechanical properties are compared in Table 2.2.

**Tab. 2.2**

| Property | Vulcanized rubber compound containing Vivatec 500 (reference 1) | Vulcanized rubber compound containing material C |
|---|---|---|
| TC 90 [s] | 8.4 | 10.1 |
| Maximum torque MDR [dNm] | 18.3 | 18.6 |
| Elongation at break [%] | 453 | 365 |
| Tensile strength [MPa] | 15.7 | 15.2 |
| Hardness [Shore A] | 67 | 71 |

### Example 3

A lignin cleavage product (material D) was produced by first preparing a solution containing 7.5% by dry matter weight lignin biopolymer and 3.75% by weight NaOH (total concentration 11.25% by weight and pH 13.5) from the commercially available lignin biopolymer UPM BioPiva 100. Subsequently, the dissolved lignin biopolymer was depolymerized in a 3/8" diameter tubular reactor at a temperature of 300 °C, a pressure of 250 bar and a flow rate of 20 kg/h, resulting in a residence time of 2 min. Then, to the resulting solution containing the now low-molecular lignin, H₂SO₄ was added to a pH of about 4 to precipitate, filter off, and wash insoluble components. The aqueous phase was extracted three times with 50% (relative to the mass of the aqueous phase) methyl isobutyl ketone, respectively. The methyl isobutyl ketone was removed from the combined methyl isobutyl ketone phases at 60 mbar and 50 °C in thin film evaporators and then at 10 mbar and 40 °C in a vacuum furnace.

The resulting lignin cleavage product (material D) contained, in terms of low-molecular constituents, 15% by weight guaiacol (determined by means of GC/MS), 5.6 mmol/g guaiacyl-OH (determined by means of ³¹P-NMR as described hereinabove), and has a weight average of the molecular weight distribution of 1230 g/mol.

A hydrophobized low-molecular lignin (material E) was produced from material D according to the formulation shown in Table 3 below.

**Tab. 3**

| | | |
|---|---|---|
| Hexanoic acid anhydride | m [g] | 456 |
| | V [ml] | 487 |
| | n [mmol] | 2128 |
| 1-Methyl imidazole | m [g] | 28.8 |
| | V [ml] | 27.9 |
| | n [mmol] | 351 |
| Material employed | | Material D |
| | m [g] | 250.5 |
| | n OH[mmol] | 1400 |
| Temperature | [°C] | 65 |
| Time | [h] | 24 |

Here, the material employed was dispersed or dissolved in the mixture of acid anhydrides and catalyst (1-methyl imidazole) and stirred at the conditions given in Table 3. After cooling, the unreacted anhydrides, acids, and the catalyst were removed in a vacuum distillation at 1 mbar and 165 °C to give a liquid (material E).

When the dissolution behavior was investigated at 80 °C, a homogeneous phase was formed from the material E obtained after distillation and one of the three media toluene, hexane, and paraffin oil, respectively. When toluene or hexane was employed, a homogeneous solution was already present at room temperature. After cooling from room temperature, the homogeneous solution persisted. Consequently, material E was evaluated as miscible.

A residual guaiacyl-OH content of 0.04 mmol/g, an aromatic and aliphatic hydroxyl group content of in total 0.15 mmol/g and an aliphatic hydroxyl group content of 0.08 mmol/g were measured for material E.

Material E has a weight-average molecular weight of 1,660 g/mol, a PDI of 1.85, a methoxyl group content of 3.5 wt.-% and a number of unsubstituted aromatic C-H bonds per aromatic ring of 2.8.

### Example 4

The monomeric starting compound 4-methylguaiacol was first dimerized to give the corresponding dimer (material F). For this purpose, 2.32 moles (320 g) of 4-methylguaiacol and 1.74 moles of formaldehyde as a 23.5% solution (in water) (207.5 ml) were brought to condensation using 13.3 ml of a 0.25 M sulfuric acid for 8 h at 95 °C in a round bottom flask under N₂ and vigorous stirring. After cooling the reaction, the unreacted aqueous formalin and the 4-methylguaiacol were removed in a vacuum distillation at 5 mbar and 150 °C.

The product obtained (material F) gave an R_{f} value of 0.16 in thin-layer chromatography with ethyl acetate-heptane (2:8). The monomer methyl guaiacol has an R_{f} value of 0.48 in the same mobile solvent. Material F is immiscible in the three media toluene, hexane, and paraffin oil, since it remains in the form of a sediment instead.

A hydrophobized lignin cleavage product G and H, respectively, was prepared from material F (according to the formulation shown in Table 4).

First, the starting material was dissolved in a mixture of a respective acid chloride and catalyst (pyridine) and solvent (methyl isobutyl ketone) and stirred at the conditions given in Table 4. In each case, the reaction mixture was washed with 3 x 350 ml of deionized water and the organic phase was treated in a vacuum distillation at 0.5 mbar and 50 °C to remove the unreacted components.

**Tab. 4**

| | | Material G | Material H |
|---|---|---|---|
| Lauroyl chloride | m [g] | 23 | - |
| | V [ml] | 25 | - |
| | n [mmol] | 104 | - |
| Stearyl chloride | m [g] | - | 25 |
| | V [ml] | - | 28 |
| | n [mmol] | - | 83 |
| Methyl isobutyl ketone | V [ml] | 56 | 45 |
| Pyridine | m [g] | 8 | 7 |
| | V [ml] | 8 | 7 |
| | n [mmol] | 104 | 83 |
| Material employed | | Material F | Material F |
| | m [g] | 15 | 12 |
| | n [mmol] | 52 | 42 |
| Temperature | [°C] | 90 | 90 |
| Time | [h] | 20 | 20 |

The main constituent of each of materials G and H was a completely hydrophobized lignin dimer. However, each of materials G and H further contained amounts of lignin dimers not completely hydrophobized (as it is evident from the OH-group contents measured as mentioned hereinafter), and, hence, represents a composition according to the present invention.

When the dissolution behavior was investigated at 80 °C, a homogeneous phase was formed from the material G or H respectively obtained after distillation and one of the three media toluene, hexane, and paraffin oil, respectively. When employing the materials G and H, respectively, with toluene or hexane, a homogeneous solution was already present at room temperature. After cooling from room temperature, the homogeneous solution persisted in both cases. Consequently, materials G and H, respectively, were evaluated as miscible.

In ³¹P-NMR, a residual guaiacyl-OH content of 0.16 mmol/g and 0.14 mmol/g, an aromatic and aliphatic hydroxyl group content of in total 0.30 and 0.26 mmol/g, and an aliphatic hydroxyl group content of 0.08 and 0.06 mmol/g was determined for materials G and H, respectively. Materials G and H further each have a M_{w}, a PDI, a methoxyl group content, and a number of unsubstituted aromatic C-H bonds per aromatic ring falling in the claimed ranges.

### Example 5

The material E according to example 3 obtained after distillation was employed in an sSBR/BR rubber formulation as shown in Table 2.1 (replacing material C with material E), in comparison with the commercially available product Vivatec 500. The mixing was carried out in a Haake Rheomix 3000 S with Banbury rotors from ThermoFischer, with the quantities given in Tab. 2.1.

A sheet was rolled out from the vulcanizable rubber compositions to a thickness of 3 mm by successively reducing the gap width of a laboratory roller. A square with the dimensions of 250x250 mm and a thickness of 2 mm was then cut from this sheet and transferred to the vulcanization press from Gibitre Instruments vulcanization press to form a test plate. The vulcanization time to be set results from the t90 time determined in the rheometer test plus one minute per millimeter of plate thickness. The vulcanized rubber sheet was immediately removed after the pressing time had elapsed and cooled on a steel cooling table. The vulcanization properties and mechanical characteristics when employing Vivatec 500 and material E are compared in Table 5 and shown in **Fig. 1****.**

**Tab. 5**

| Property | Vulcanized rubber compound containing Vivatec 500 (reference 2) | Vulcanized rubber compound containing material E |
|---|---|---|
| Maximum torque MDR [dNm] | 17.1 | 21.3 |
| Elongation at break [%] | 388 | 371 |
| Tensile strength [MPa] | 15.4 | 12.2 |
| Hardness [Shore A] | 70 | 75 |
| Elongation at break after 7 d ageing [%] | 203 | 214 |
| Tensile strength after 7 d ageing [MPa] | 14.3 | 13.4 |
| Hardness after 7 d ageing [Shore A] | 78 | 87 |
| Elongation at break after 28 d ageing [%] | 101 | 150 |
| Tensile strength after 28 d ageing [MPa] | 12.5 | 14.5 |
| Hardness after 28 d ageing [Shore A] | 86 | 91 |

### Example 6

A lignin cleavage product (material M) was produced by first preparing a solution containing 5% by dry matter weight lignin biopolymer and 1.7% by weight NaOH (total concentration 6.7% by weight and pH 13.3) from the commercially available lignin biopolymer UPM BioPiva 100. Subsequently, the dissolved lignin biopolymer was depolymerized in a 3/8" diameter tubular reactor at a temperature of 270 °C, a pressure of 250 bar and a flow rate of 15 kg/h, resulting in a residence time of 2.5 min. Then, to the resulting solution containing the now low-molecular lignin, H₂SO₄ was added to a pH of about 7 to precipitate, filter off, and wash insoluble components. The aqueous phase was extracted with approx. 60% (relative to the mass of the aqueous phase) methyl isobutyl ketone, respectively. The methyl isobutyl ketone was removed from the combined methyl isobutyl ketone phases at 60 mbar and 50 °C in thin film evaporators and then at 10 mbar and 40 °C in a vacuum furnace.

The resulting lignin cleavage product (material M) contained, in terms of low-molecular constituents, 3.5% by weight guaiacol (determined by means of GC/MS), 3.4 mmol/g guaiacyl-OH (determined by means of ³¹P-NMR as described hereinabove), and has a weight average of the molecular weight distribution of 2,100 g/mol and a PDI of 1.9.

A hydrophobized lignin cleavage product (material N) was prepared from material M according to the formulation shown in Table 6.

**Tab. 6**

| | | Material N |
|---|---|---|
| Lauric acid | m [g] | 120 |
| | n [mmol] | 600 |
| p-toluenesulfonic acid | m [g] | 3 |
| | n [mmol] | 18 |
| Material employed | | Material M |
| | m [g] | 10 |
| | n OH [mmol] | 34 |
| Temperature | [°C] | 110 |
| Time | [h] | 22 |
| Pressure | [mbar] | 200 |

First, the starting material M was dissolved in the mixture of acid and catalyst (p-toluenesulfonic acid) and stirred at the conditions given in Table 7 with removal of water using a distillation using a vacuum-insulated distillation bridge. The reaction mixture was dissolved in MIBK, insoluble solids were filtered, and the mixture was treated in a vacuum distillation at up to 160°C and 0.15 mbar. As a result, material N was obtained.

When the dissolution behavior was investigated at 80 °C, a homogeneous phase was formed from the material N obtained after distillation and toluene. After cooling to room temperature, the homogeneous solution persisted. Consequently, material N was evaluated as miscible.

A residual guaiacyl-OH content of 0.2 mmol/g, an aromatic and aliphatic hydroxyl group content of in total 0.3 mmol/g and an aliphatic hydroxyl group content of 0.03 mmol/g was measured in the ³¹P-NMR spectroscopy. Further, material N had a weight average molecular weight of 18640 g/mol, a PDI of 7.5, a methoxyl group content of 3.7 wt.-% and a number of unsubstituted aromatic C-H bonds per aromatic ring of 3.0.

## Claims

1. A composition comprising at least two lignin constituents A) and B) being different from each other,
wherein at least a part of the oxygen atoms originating from hydroxyl groups present in the chemical structure of at least one of constituents A) and B) is covalently bonded to at least one kind of organic residues selected from organic residues comprising at least 1 and at most 22 carbon atoms,
wherein the weight average molecular weight (M_{w}) of all lignin constituents being present in the composition including constituents A) and B) is > 200 g/mol, and wherein the polydispersity index (PDI) of all lignin constituents being present in the composition including constituents A) and B) is >1.20,
wherein the sum of aromatic and aliphatic hydroxyl groups of all lignin constituents being present in the composition including constituents A) and B) is 0 or ≤ 2.00 mmol/g, and wherein the sum of aliphatic hydroxyl groups of all lignin constituents being present in the composition including constituents A) and B) is 0 or < 0.25 mmol/g,
wherein the methoxyl group content of all lignin constituents being present in the composition including constituents A) and B) is in a range of 1.0 wt.-% to 20.0 wt.-%, based on the total weight of all lignin constituents being present in the composition including constituents A) and B), and
wherein the number of unsubstituted aromatic C-H bonds per aromatic ring of each chemical structure of each lignin constituent being present in the composition including constituents A) and B) is on average ≥ 2 and ≤ 4.

2. The composition according to claim 1, wherein the at least one kind of organic and preferably aliphatic residues covalently bonded to at least part of the oxygen atoms originating from hydroxyl groups present in the chemical structure of at least one of constituents A) and B) is selected from the group consisting of monovalent organic residues that contain at least 1 and at most 20, preferably at most 18, more preferably at most 16, even more preferably at most 14, still more preferably at most 12, and/or that contain a minimum of 2, preferably a minimum of 3, more preferably a minimum of 4, even more preferably a minimum of 6, still more preferably a minimum of 10, carbon atoms, wherein said carbon atoms preferably are adjacent to one another, preferably wherein said organic aliphatic residue is selected from the group consisting of monovalent aliphatic C₁ to C₂₂ residues and aliphatic C(=O)-H to C(=O)-C₂₁ residues, more preferably is selected from aliphatic C₂ to C₂₀ residues and aliphatic C(=O)-C to C(=O)-C₁₉ residues, even more preferably is selected from aliphatic C₃ to C₁₈ residues and aliphatic C(=O)-C₂ to C(=O)-C₁₇ residues, still more preferably is selected from aliphatic C₄ to C₁₆ residues and aliphatic C(=O)-C₃ to C(=O)-C₁₅ residues, yet more preferably is selected from aliphatic C₆ to C₁₄ residues and aliphatic C(=O)-C₅ to C(=O)-C₁₃ residues, most preferably is selected from aliphatic C₁₀ to C₁₂ residues and aliphatic C(=O)-C₉ to C(=O)-C₁₁ residues.

3. The composition according to claim 1 or 2, wherein
the sum of aromatic and aliphatic hydroxyl groups of all lignin constituents being present in the composition including constituents A) and B) is 0 or < 1.75 mmol/g, preferably 0 or < 1.50 mmol/g, more preferably 0 or < 1.25 mmol/g, still more preferably 0 or < 1.00 mmol/g, and/or wherein
the sum of aliphatic hydroxyl groups of all lignin constituents being present in the composition including constituents A) and B) is 0 or < 0.20 mmol/g, preferably is 0 or < 0.15 mmol/g, more preferably is 0 or < 0.10 mmol/g, even more preferably is 0 or <0.05 mmol/g, and/or
wherein the methoxyl group content of all lignin constituents being present in the composition including constituents A) and B) is in a range of 1.0 wt.-% to 17.5 wt.-%, preferably of from 1.2 wt.-% to 15.0 wt.-%, more preferably of from 1.5 wt.-% to 14.0 wt.-%, based in each case on the total weight of all lignin constituents being present in the composition including constituents A) and B).

4. The composition according to one or more of the preceding claims, wherein the weight average molecular weight (M_{w}) of all lignin constituents being present in the composition including constituents A) and B) is >230 g/mol, preferably >260 g/mol, more preferably >290, even more preferably >320 g/mol, still more preferably >350 g/mol, yet more preferably >380 g/mol, still more preferably >410 g/mol, even more preferably >440 g/mol, yet more preferably >470 g/mol, still more preferably >500 g/mol, most preferably >530 g/mol, wherein the upper limit of the weight average molecular weight (M_{w}) of all lignin constituents being present in the composition including constituents A) and B) preferably is <25,000 g/mol, more preferably <20,000 g/mol, still more preferably <15,000 g/mol, yet more preferably <10,000 g/mol, even more preferably <9,000 g/mol, still more preferably <8,000 g/mol, even more preferably <7,000 g/mol, still more preferably <6,000 g/mol, even more preferably <5,000 g/mol, in particular <3,000 g/mol, respectively, and/or wherein the polydispersity index (PDI) of all lignin constituents being present in the composition including constituents A) and B) is >1.25, preferably is >1.30, more preferably is >1.35, even more preferably is >1.40, yet more preferably is >1.45, still more preferably is >1.50.

5. The composition according to one or more of the preceding claims, wherein at least one of constituents A) and B) contains at least one structural unit of general formula (I) in its chemical structure, 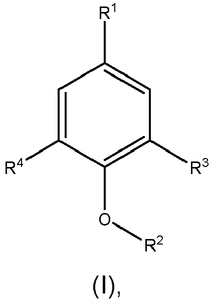
wherein in each structural unit of the general formula (I), independently from one another, respectively,
each residue R¹ is independently selected from the group consisting of H, an aliphatic C₁-C₆ residue, optionally containing one or more oxygen atoms and/or one or more sulfur atoms, an organic residue of the formula Z-OH, an organic residue of the formula Z-O-R⁵, and an at least divalent linker unit L1, through which the structural unit of the general formula (I) is chemically bonded to the at least one other structural unit of the general formula (I) or to a structural unit different therefrom,
wherein each Z in each case independently denotes a divalent aliphatic C₁-C₆ residue, optionally containing oxygen and/or sulfur, and
wherein each R⁵ represents an organic residue that contains at least 1, preferably at least 5, and at most 22 carbon atoms and optionally contains one or more oxygen atoms and/or one or more sulfur atoms,
each residue R² is independently selected from H, organic residues that contain at least 1 and at most 22 carbon atoms and optionally contain one or more oxygen atoms and/or one or more sulfur atoms, and at least one divalent linker unit L2, through which the structural unit of the general formula (I) is chemically bonded to the at least one other structural unit of the general formula (I) or to a structural unit different therefrom,
each residue R³ is independently selected from the group consisting of H, OH, an organic residue of the formula O-R⁶, and a divalent linker unit L3, through which the structural unit of the general formula (I) is chemically bonded to the at least one other structural unit of the general formula (I) or to a structural unit different therefrom,
wherein R⁶ represents an organic residue that contains at least 1, preferably at least 5, and at most 22 carbon atoms and optionally contains one or more oxygen atoms and/or one or more sulfur atoms, and
each residue R⁴ is independently selected from the group consisting of H, OH, an organic residue of the formula O-R⁷, and a divalent linker unit L4, through which the structural unit of the general formula (I) is chemically bonded to the at least one other structural unit of the general formula (I) or to a structural unit different therefrom,
wherein R⁷ represents an organic residue that contains at least 1, preferably at least 5, and at most 22 carbon atoms and optionally contains one or more oxygen atoms and/or one or more sulfur atoms,
with the proviso that at least one residue R² denotes an organic residue that contains at least 1 and at most 22 carbon atoms and/or that at least one residue R¹ denotes an organic residue of the formula Z-O-R⁵ and/or that at least one residue R³ denotes an organic residue of the formula O-R⁶ and/or that at least one residue R⁴ denotes an organic residue of the formula Q-R⁷.

6. The composition according to one or more of the preceding claims, wherein at least one of constituents A) and B), preferably both constituents A) and B), contains at least two structural units of general formula (I) in its chemical structure, wherein said at least two structural units of general formula (I) are the same or different from one another in each case, 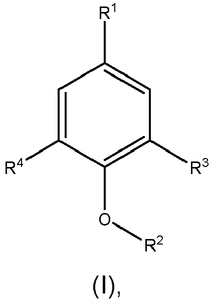
wherein, in each of the at least two structural units of the general formula (I), independently from one another, respectively,
each residue R¹ is independently selected from the group consisting of H, an aliphatic C₁-C₆ residue, optionally containing one or more oxygen atoms and/or one or more sulfur atoms, an organic residue of the formula Z-OH, an organic residue of the formula Z-O-R⁵, and an at least divalent linker unit L1, through which the structural unit of the general formula (I) is chemically bonded to the at least one other structural unit of the general formula (I) or to a structural unit different therefrom,
wherein each Z in each case independently denotes a divalent aliphatic C₁-C₆ residue, optionally containing oxygen and/or sulfur, and
wherein each R⁵ represents an organic residue that contains at least 1, preferably at least 5, and at most 22 carbon atoms, and optionally contains one or more oxygen atoms and/or one or more sulfur atoms,
each residue R² is independently selected from H, organic residues that contain at least 1, preferably at least 5 and at most 22 carbon atoms, and optionally contain one or more oxygen atoms and/or one or more sulfur atoms, and at least one divalent linker unit L2, through which the structural unit of the general formula (I) is chemically bonded to the at least one other structural unit of the general formula (I) or to a structural unit different therefrom,
each residue R³ is independently selected from the group consisting of H, OH, an organic residue of the formula O-R⁶, and a divalent linker unit L3, through which the structural unit of the general formula (I) is chemically bonded to the at least one other structural unit of the general formula (I) or to a structural unit different therefrom,
wherein R⁶ represents an organic residue that contains at least 1, preferably at least 5, and at most 22 carbon atoms and optionally contains one or more oxygen atoms and/or one or more sulfur atoms, and
each residue R⁴ is independently selected from the group consisting of H, OH, an organic residue of the formula O-R⁷, and a divalent linker unit L4, through which the structural unit of the general formula (I) is chemically bonded to the at least one other structural unit of the general formula (I) or to a structural unit different therefrom,
wherein R⁷ represents an organic residue that contains at least 1, preferably at least 5, and at most 22 carbon atoms and optionally contains one or more oxygen atoms and/or one or more sulfur atoms,
with the proviso that the at least two structural units of the general formula (I) are chemically bonded to one another through at least one of the linker units L1, L2, L3 or L4, and
with the further proviso that at least one residue R² in at least one structural unit of general formula (I) denotes an organic residue that contains at least 1 and at most 22 carbon atoms and/or that at least one residue R¹ in at least one structural unit of general formula (I) denotes an organic residue of the formula Z¹-O-R⁵ and/or that at least one residue R³ denotes an organic residue of the formula O-R⁶ and/or that at least one residue R⁴ denotes an organic residue of the formula O-R⁷.

7. The composition according to claim 6, wherein, relative to each structural unit of the general formula (I) present in the chemical structure of at least one of constituents A) and B), the sum of the organic residues containing at least 1 and at most 22 carbon atoms, preferably the sum of residues R¹, R², R³ and R⁴, in which R¹ represents an organic residue of the formula Z-O-R⁵, in which R² represents an organic residue that contains at least 1 and at most 22 carbon atoms and optionally contains one or more oxygen atoms and/or one or more sulfur atoms, in which R³ represents an organic residue of the formula O-R⁶, and in which R⁴ represents an organic residue of the formula O-R⁷, is > 0.20, preferably > 0.30, more preferably > 0.35, even more preferably > 0.50, on average.

8. The composition according to claim 6 or 7, wherein at least one of constituents A) and B) contains at least one structural unit of the general formula (II) which comprises at least two structural units of the formula (I) that are linked to each other through linker unit L3, 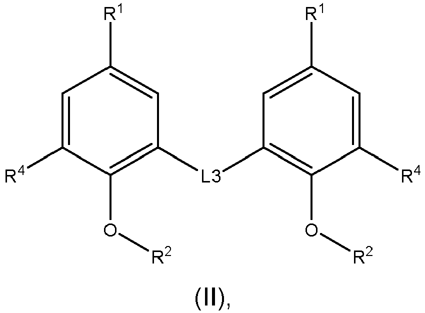 wherein the residues R¹, R², R⁴ have the same meanings as defined in claim 6 or 7, and wherein linker L3 preferably has the meaning as defined in claim 6.

9. The composition according to one or more of claims 6 to 8, wherein residues R¹ or R² are selected from the group consisting of H, an aliphatic C₁-C₃ residue optionally containing one or more oxygen atoms and/or one or more sulfur atoms, an organic residue of the formula Z-OH, and an organic residue of the formula Z-O-R⁵, and/or wherein linker units L1, L2 and L3 as well as L4 independently from one another, respectively, link at least two of structural units of the general formula (I) directly to one another through a single bond, or by means of an organic residue as linker unit that contains at least one carbon atom and/or heteroatom, preferably oxygen atom, and preferably independently from one another, respectively, denotes an aliphatic residue, preferably aliphatic C₁-C₃ residue that optionally may contain one or more oxygen atoms.

10. A process for preparing the composition according to one or more of the preceding claims, which comprises at least steps 1) and 2), namely
1) provision of a precursor composition comprising at least two lignin precursor constituents A-1) and B-1) being different from each other, wherein the weight average molecular weight (M_{w}) of all lignin precursor constituents being present in the precursor composition including precursor constituents A-1) and B-1) is lower than the weight average molecular weight (M_{w}) of all lignin constituents being present in the composition obtained after step 2) including at least constituents A) and B), wherein at least one, preferably both, of two lignin precursor constituents A-1) and B-1) bear one or more hydroxyl groups, and
2) reacting at least part of the hydroxyl groups of at least one of lignin precursor constituents A-1) and B-1) with at least one agent containing at least one kind of organic residues selected from organic residues that in turn contain at least 1 and at most 22 carbon atoms and optionally contain one or more oxygen atoms and/or one or more sulfur atoms, and include at least one reactive functional group that can react with at least part of the hydroxyl groups of at least one of the lignin precursor constituents A-1) and B-1) such that covalent bonds between at least a part of the oxygen atoms of the hydroxyl groups of at least one of lignin precursor constituents A-1) and B-1) and the at least one organic residue comprising at least 1 and at most 22 carbon atoms originating from the agent used are formed, wherein after having performed step 2) the composition comprising the at least two lignin constituents A) and B) is obtained.

11. The process according to claim 10, wherein at least one of precursor constituents A-1) and B-1) contains at least one structural unit of general formula (Ia) in its chemical structure, 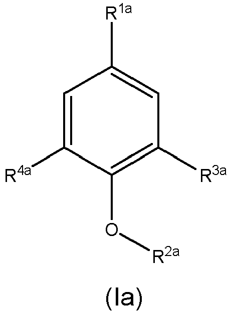
wherein in each structural unit of the general formula (Ia), independently from one another, respectively,
each residue R^{1a} is independently selected from the group consisting of H, an aliphatic C₁-C₆ residue, optionally containing one or more oxygen atoms and/or one or more sulfur atoms, an organic residue of the formula Z-OH, and an at least divalent linker unit L1, through which the structural unit of the general formula (Ia) is chemically bonded to the at least one other structural unit of the general formula (Ia) or to a structural unit different therefrom,
wherein each Z in each case independently denotes a divalent aliphatic C₁-C₆ residue, optionally containing oxygen and/or sulfur, and
each residue R^{2a} is independently selected from H, OH, and at least divalent linker unit L2, through which the structural unit of the general formula (Ia) is chemically bonded to the at least one other structural unit of the general formula (Ia) or to a structural unit different therefrom,
each residue R^{3a} is independently selected from the group consisting of H, OH and OCH₃, preferably selected from the group consisting of H and OH, and a divalent linker unit L3, through which the structural unit of the general formula (Ia) is chemically bonded to the at least one other structural unit of the general formula (Ia) or to a structural unit different therefrom, and
each residue R^{4a} is independently selected from the group consisting of H, OH and OCH₃, preferably selected from the group consisting of H and OH, and a divalent linker unit L4, through which the structural unit of the general formula (Ia) is chemically bonded to the at least one other structural unit of the general formula (Ia) or to a structural unit different therefrom,
preferably with the proviso that at least one residue R^{2a} denotes OH and/or that at least one residue R^{1a} denotes an organic residue of the formula Z-OH and/or that at least one residue R^{3a} denotes OH and/or that at least one residue R^{4a} denotes OH,
wherein at least part of the OH groups present in the structural unit of the general formula (Ia) of at least one of lignin precursor constituents A-1) and B-1) is reacted with the agent employed in step 2) of the process.

12. The process according to claim 11, wherein at least one, preferably both, of precursor constituents A-1) and B-1) contains at least two structural units of general formula (Ia) in its chemical structure, wherein said at least two structural units of general formula (Ia) are the same or different from one another, and wherein in each case, in each of the at least two structural units of the general formula (Ia), independently from one another, respectively, each of residues R^{1a}, R^{2a}, R^{3a} and R^{4a} as well as Z has the meaning defined in claim 11,
with the provision that the at least two structural units of the general formula (Ia) are chemically bonded to one another through at least one of the linker units L1, L2, L3 or L4, and
with the further proviso that at least one residue R^{2a} denotes OH and/or that at least one residue R^{1a} denotes an organic residue of the formula Z-OH and/or that at least one residue R^{3a} denotes OH and/or that at least one residue R^{4a} denotes OH.

13. A mixture of at least one composition according to any one or more of claims 1 to 9, or at least one composition obtainable by the process according to one or more claims 10 to 12, and at least one hydrocarbon, preferably at least one nonpolar hydrocarbon.

14. A use of at least one composition according to any one or more of claims 1 to 9, or of at least one composition obtainable by the process according to one or more claims 10 to 12, in polymer-containing formulations, coating formulations, preferably as plasticizer, plasticizer oil, and/or process oil, respectively, or pharmaceutical formulations or cosmetic formulations, and/or a use of at least one composition according to any one or more of claims 1 to 9, or of at least one composition obtainable by the process according to one or more claims 10 to 12 for treatment of a surface of a substrate, wherein the surface preferably is metallic, made of glass, made of at least one kind of plastic, or made of paper, and wherein preferably a film is formed on said surface by said treatment.

15. A polymer formulation, preferably a rubber formulation, comprising at least one polymer, preferably at least one rubber, and at least one composition according to any one or more of claims 1 to 9 or at least one composition obtainable by the process according to claim 10 to 12, wherein the polymer formulation preferably further comprises at least one filler, preferably when the polymer formulation is a rubber formulation, more preferably a vulcanizable rubber formulation.
